# EUROPEAN PATENT APPLICATION

(11) **EP 4 167 431 A1**
(43) Date of publication of application: **19.04.2023**
(21) Application number: 21819311.8
(22) Date of filing: 29.07.2021
(51) Int. Cl.: H02J 7/02, H01M 10/44

(54) **CHARGING/DISCHARGING APPARATUS, BATTERY CHARGING METHOD, AND CHARGING/DISCHARGING SYSTEM**

(71) Applicant: Contemporary Amperex Technology Co., Limited, Fujian 352100 (CN)
(72) Inventor: ZUO, Xiyang, Ningde, Fujian 352100 (CN); YAN, Yu, Ningde, Fujian 352100 (CN); LI, Bao, Ningde, Fujian 352100 (CN); WANG, Xiao, Ningde, Fujian 352100 (CN); LI, Zhanliang, Ningde, Fujian 352100 (CN); LIN, Longzhen, Ningde, Fujian 352100 (CN)
(74) Representative: Pfenning, Meinig & Partner mbB
(86) International application number: PCT/CN2021/109372
(87) International publication number: WO 2023/004711

(57) **Abstract**

Embodiments of the present application provide a charging and discharging apparatus, a method for charging a battery and a charging and discharging system, which are capable of ensuring security performance of a battery. The charging and discharging apparatus includes a bidirectional AC/DC converter, a first DC/DC converter, a second DC/DC converter and a control unit. The control unit is configured to: receive a first charging request transmitted by the BMS and control the bidirectional AC/DC converter and the first DC/DC converter according to the first charging request charge the battery through an AC power source, and/or control the second DC/DC converter and the first DC/DC converter to charge the battery through an energy storage unit; receive a first discharging request transmitted by the BMS and discharging a power of the battery according to the first discharging request; and receive a second charging request transmitted by the BMS and control the bidirectional AC/DC converter and the first DC/DC converter according to the second charging request to charge the battery through the AC power source, and/or control the second DC/DC converter and the first DC/DC converter to charge the battery through the energy storage unit.

## Description

### TECHNICAL FIELD

The present application relates to the field of batteries and in particular, relates to a charging and discharging apparatus, a method for charging a battery and a charging and discharging system.

### BACKGROUND

Along with the development of the times, due to the advantages of high environmental friendliness, low noise, low use cost and the like, the electric vehicle has a huge market prospect, can effectively promote energy conservation and emission reduction, and is beneficial to the development and progress of the society.

For the electric vehicles and related fields thereof, the battery technology is an important factor related to the development of the electric vehicles, in particular, the safety performance of the battery influences the development and application of battery related products, and influences the acceptance of the public for the electric vehicles. Hence, how to guarantee the safety performance of the battery is a to-be-solved technical problem.

### SUMMARY

Embodiments of the present application provide a charging and discharging apparatus, a method for charging a battery and a charging and discharging system, which are capable of increasing a charging speed of the battery and shortening a charging time.

In a first aspect, a charging and discharging apparatus is provided. The charging and discharging apparatus includes a bidirectional AC/DC converter, a first DC/DC converter, a second DC/DC converter and a control unit, where one end of the second DC/DC converter is connected between the first DC/DC converter and the bidirectional AC/DC converter, the other end of the second DC/DC converter is connected to an energy storage unit, and the first DC/DC converter is a bidirectional DC/DC converter.

The control unit is configured to: receive a first charging request transmitted by the BMS of the battery and control the bidirectional AC/DC converter and the first DC/DC converter according to the first charging request to charge the battery through the AC power source, and/or control the second DC/DC converter and the first DC/DC converter to charge the battery through the energy storage unit, where the first charging request includes a first charging current; receive a first discharging request transmitted by the BMS and discharging a power of the battery according to the first discharging request, where the first discharging request includes a first discharging current, and the first discharging current is a discharging current transmitted by the BMS when a first accumulative charging amount of the battery is greater than or equal to a first accumulative charging amount threshold and a voltage of a battery cell of the battery does not exceed a full charging voltage of the battery cell; and receive a second charging request transmitted by the BMS and control the bidirectional AC/DC converter and the first DC/DC converter according to the second charging request to charge the battery through the AC power source, and/or control the second DC/DC converter and the first DC/DC converter to charge the battery through the energy storage unit, where the second charging request includes a second charging current and the second charging current is a charging current transmitted by the BMS when a first accumulative discharging amount of the battery is greater than or equal to a first accumulative discharging amount threshold.

Based on the technical solution, in the process of charging the battery, the control unit enables the charging and discharging apparatus to charge and discharge the battery alternatively based on the first charging current and the first discharging current transmitted by the BMS by controlling the bidirectional AC/DC converter, the first DC/DC converter and the second DC/DC converter, thereby avoiding the problems of the battery such as heating, lithium ion aggregation, and the like, caused by continuous charging, and then avoiding the safety problems of the battery, such as battery combustion or explosion, caused by heating, lithium ion aggregation and the like, so that the safety performance of the battery is guaranteed.

Moreover, since the charging and discharging apparatus further includes a second DC/DC converter connected to an energy storage unit, the battery can discharge its power to an AC power source and/or the energy storage unit, thereby improving an output capability of the charging and discharging apparatus, more effectively charging and discharging the battery alternatively and avoiding the problems of the battery such as heating, lithium ion aggregation, and the like, caused by continuous charging, and then avoiding the safety problems of the battery, such as battery combustion or explosion, caused by heating, lithium ion aggregation, and the like, so that the safety performance of the battery is guaranteed.

In addition, when the second DC/DC converter is a bidirectional DC/DC converter, the energy storage unit can also be configured to charge the battery, thereby improving charging efficiency of the charging and discharging apparatus.

In a possible implementation, the control unit is further configured to: receive a second discharging request transmitted by the BMS and discharge the power of the battery according to the second discharging request, where the second discharging request includes a second discharging current, and the second discharging current is a discharging current transmitted by the BMS when a second accumulative charging amount of the battery is greater than or equal to a second accumulative charging amount threshold and a voltage of a battery cell of the battery does not exceed a full charging voltage of the battery cell.

In the embodiment, through information interaction between the BMS and the charging and discharging apparatus, after the completion of charging, discharging and recharging of the battery, the battery may be further discharged again. In this way, a multi-cycle charging and discharging method can be further provided, charging and discharging processes are sequentially and cyclically implemented to achieve gradually charging of the battery on the basis of ensuring the performance of the battery.

In a possible implementation, the control unit is further configured to: receive a charging stop command transmitted by the BMS and stop charging the battery according to the charging stop command, where the charging stop command is a command transmitted by the BMS when a voltage of a battery cell of the battery exceeds a full charging voltage of the battery cell.

In a possible implementation, the control unit is specifically configured to: control the first DC/DC converter and the bidirectional AC/DC converter according to the first discharging request to discharge the batter capacity of the battery to the AC power source; and/or control the second DC/DC converter according to the first discharging request to simultaneously discharge the power of the battery to the energy storage unit.

In a possible implementation, the first discharging request further includes a first discharging voltage and the control unit is specifically configured to: set an input power of the first DC/DC converter according to the first discharging voltage and the first discharging current; acquire the SOC of the energy storage unit; acquire a bus voltage of the charging and discharging apparatus in real time; when the SOC of the energy storage unit is less than a first threshold, turn on the second DC/DC converter to discharge the power of the battery to the energy storage unit through the first DC/DC converter and the second DC/DC converter; when the bus voltage is greater than a bus balance voltage and a difference value between the bus voltage and the bus balance voltage exceeds a preset value in a process of discharging of the battery to the energy storage unit, adjust an input power of the second DC/DC converter to a first input power of the second DC/DC converter, where the first input power of the second DC/DC converter is less than or equal to a maximum input power of the second DC/DC converter; where when the second DC/DC converter works based on the first input power of the second DC/DC converter, the difference value between the bus voltage and the bus balance voltage is less than or equal to the preset value.

In a possible implementation, the control unit is further configured to: when the bus voltage is greater than a bus balance voltage and a difference value between the bus voltage and the bus balance voltage exceeds a preset value in a process of discharging of the battery to the energy storage unit, adjust an input power of the second DC/DC converter to a maximum input power of the second DC/DC converter, turn on the AC/DC converter and adjust an input power of the AC/DC converter to a first input power of the AC/DC converter to simultaneously discharge the power of the battery to the AC power source through the AC/DC converter and the first DC/DC converter. When the second DC/DC converter works based on the maximum input power of the second DC/DC converter and the AC/DC converter works at the first input power of the AC/DC converter, the difference value between the bus voltage and the bus balance voltage is less than or equal to the preset value.

In the embodiment, when the SOC of the energy storage unit is relatively low, the power of the battery is preferentially discharged to the energy storage unit to supplement the power stored in the energy storage unit; and when a difference between the bus voltage and the bus balance voltage is relatively large, the power of the battery is then simultaneously discharged to the AC power source, in which case the power discharged from the battery are received by the AC power source and the energy storage unit together. Thus, balance between the bus voltage and the bus balance voltage is kept, so that the charging and discharging apparatus can discharge the battery in a stable state.

In a possible implementation, the control unit is specifically configured to: when the SOC of the energy storage unit is greater than a first threshold and less than a second threshold, turn on the AC/DC converter to discharge the power of the battery to the AC power source through the first DC/DC converter and the AC/DC converter; when the bus voltage is greater than a bus balance voltage and a difference value between the bus voltage and the bus balance voltage exceeds a preset value in a process of discharging of the battery to the AC power source, adjust an input power of the AC/DC converter to a second input power of the AC/DC converter, where the second input power of the AC/DC converter is less than or equal to a maximum input power of the AC/DC converter. When the AC/DC converter works based on the second input power of the AC/DC converter, the difference value between the bus voltage and the bus balance voltage is less than or equal to the preset value.

In a possible implementation, the control unit is specifically configured to: when the bus voltage is greater than a bus balance voltage and a difference value between the bus voltage and the bus balance voltage exceeds a preset value in a process of discharging of the battery to the AC power source, adjust an input power of the AC/DC converter to a maximum input power of the AC/DC converter, start the second DC/DC converter and adjust an input power of the second DC/DC converter to a second input power of the second DC/DC converter to simultaneously discharge the power of the battery to the energy storage unit through the first DC/DC converter and the second DC/DC converter. When the AC/DC converter works based on the maximum input power of the AC/DC converter and the second DC/DC converter works based on the second input power of the second DC/DC converter, the difference value between the bus voltage and the bus balance voltage is less than the preset value.

In the embodiment, when the SOC of the energy storage unit is within a proper range, the power of the battery is preferentially discharged to the AC power source to prevent the power stored in the energy storage unit from exceeding its capacity, and when the difference between the bus voltage and the bus balance voltage is relatively large, the power of the battery is then simultaneously discharged to the energy storage unit, in which case the power discharged from the battery are received by the energy storage unit and the AC power source together. Thus, the balance between the bus voltage and the bus balance voltage is kept, so that the charging and discharging apparatus can discharge the battery in a stable state.

In a possible implementation, the control unit is specifically configured to: when the SOC of the energy storage unit is greater than the second threshold, turn on the AC/DC converter to discharge the power of the battery to the AC power source through the first DC/DC converter and the AC/DC converter, and control to turn off the second DC/DC converter to disable discharging of the power of the battery to the energy storage unit through the first DC/DC converter and the second DC/DC converter; and when the bus voltage is greater than a bus balance voltage and a difference value between the bus voltage and the bus balance voltage exceeds a preset value in a process of discharging the power of the battery to the AC power source, adjust an input power of the AC/DC converter to a third input power of the AC/DC converter, where the third input power of the AC/DC converter is less than or equal to a maximum input power of the AC/DC converter. When the AC/DC converter works based on the third input power of the AC/DC converter, the difference value between the bus voltage and the bus balance voltage is less than or equal to the preset value.

In a possible implementation, the control unit is further configured to: when the bus voltage is greater than a bus balance voltage and a difference value between the bus voltage and the bus balance voltage exceeds a preset value in a process of discharging the power of the battery to the AC power source, adjust an input power of the AC/DC converter to a maximum input power of the AC/DC converter and set an input power of the first DC/DC converter as a maximum input power of the AC/DC converter.

In the embodiment, when the SOC of the energy storage unit is relatively high, the power of the battery is only discharged to the AC power source to prevent the power stored in the energy storage unit from exceeding its capacity.

In a possible implementation, the first DC/DC converter is a bidirectional DC/DC converter, the first charging request further includes a first charging voltage, and the control unit is specifically configured to: set an output power of the first DC/DC converter according to the first charging voltage and the first charging current; acquire the SOC of the energy storage unit; when the SOC of the energy storage unit is greater than a third threshold, turn on the second DC/DC converter to charge the battery by the energy storage unit through the first DC/DC converter and the second DC/DC converter; acquire a bus voltage of the charging and discharging apparatus in real time; when the bus voltage is less than a bus balance voltage and a difference value between the bus voltage and the bus balance voltage exceeds a preset value in a process of charging the battery by the energy storage unit, adjust an output power of the second DC/DC converter to a first output power of the second DC/DC converter, where the first output power of the second DC/DC converter is less than or equal to a maximum output power of the second DC/DC converter. When the second DC/DC converter works based on the first output power of the second DC/DC converter, the difference value between the bus voltage and the bus balance voltage is less than or equal to the preset voltage value.

In a possible implementation, the control unit is further configured to: when the bus voltage is less than a bus balance voltage and a difference value between the bus voltage and the bus balance voltage exceeds a preset value in a process of charging the battery by the energy storage unit, adjust an output power of the second DC/DC converter to a maximum output power of the second DC/DC converter, turn on the AC/DC converter and adjust an output power of the AC/DC converter to a first output power of the AC/DC converter to simultaneously charge the battery by the AC power source through the AC/DC converter and the first DC/DC converter. When the second DC/DC converter works based on the maximum output power of the second DC/DC converter and the AC/DC converter works at the first output power of the AC/DC converter, the difference value between the bus voltage and the bus balance voltage is less than or equal to the preset value.

In the embodiment, when the SOC of the energy storage unit is relatively high, the energy storage unit is preferential to charge the battery to discharge the power stored in the energy storage unit and make preparations for subsequently receiving the power discharged by the battery, and when the difference between the bus voltage and the bus balance voltage is relatively large, the AC power source is turned on, in which case the battery is charged by the AC power source and the energy storage unit together. Thus, the balance between the bus voltage and the bus balance voltage is kept to facilitate the charging and discharging apparatus to charge the battery in a stable state.

In a possible implementation, the control unit is specifically configured to: when the SOC of the energy storage unit is greater than a fourth threshold and less than the third threshold, turn on the AC/DC converter to charge the battery by the AC power source through the first DC/DC converter and the AC/DC converter; when the bus voltage is less than a bus balance voltage and a difference value between the bus voltage and the bus balance voltage exceeds a preset value in a process of charging the battery by the AC power source, adjust an output power of the AC/DC converter to a second output power of the AC/DC converter, where the second output power of the AC/DC converter is less than or equal to a maximum output power of the AC/DC converter. When the AC/DC converter works based on the second output power of the AC/DC converter, the difference value between the bus voltage and the bus balance voltage is less than or equal to the preset value.

In a possible implementation, the control unit is further configured to: when the bus voltage is less than a bus balance voltage and a difference value between the bus voltage and the bus balance voltage exceeds a preset value in a process of charging the battery by the AC power source, adjust an output power of the AC/DC converter to a maximum output power of the AC/DC converter, turn on the second DC/DC converter and adjust an output power of the second DC/DC converter to a second output power of the second DC/DC converter to simultaneously charge the battery by the energy storage unit through the first DC/DC converter and the second DC/DC converter. When the AC/DC converter works based on the maximum output power of the AC/DC converter and the second DC/DC converter works based on the second output power of the second DC/DC converter, the difference value between the bus voltage and the bus balance voltage is less than the preset value.

In the embodiment, when the SOC of the energy storage unit is in a proper range, the AC power source is used to charge the battery preferentially, and when the difference between the bus voltage and the bus balance voltage is relatively large, the energy storage unit is turned on, in which case the battery is charged by the AC power source and the energy storage unit together. Thus, the balance between the bus voltage and the bus balance voltage is kept to facilitate the charging and discharging apparatus to charge the battery in a stable state.

In a possible implementation, the control unit is further configured to: when the SOC of the energy storage unit is less than a fourth threshold, turn on the AC/DC converter to charge the battery by the AC power source through the first DC/DC converter and the AC/DC converter; when the bus voltage is less than a bus balance voltage and a difference value between the bus voltage and the bus balance voltage exceeds a preset value in a process of charging the battery by the AC power source, adjust an output power of the AC/DC converter to a third output power of the AC/DC converter, where the third output power of the AC/DC converter is less than a maximum output power of the AC/DC converter. When the AC/DC converter works based on the third output power of the AC/DC converter, the difference value between the bus voltage and the bus balance voltage is less than or equal to the preset value.

In a possible implementation, the control unit is further configured to: when the bus voltage is less than a bus balance voltage and a difference value between the bus voltage and the bus balance voltage exceeds a preset value in a process of charging the battery by the AC power source, adjust an input power of the AC/DC converter to a maximum input power of the AC/DC converter and set an output power of the first DC/DC converter as a maximum output power of the AC/DC converter.

In the embodiment, when the SOC of the energy storage unit is relatively low, only the AC power source is used to charge the battery to save the power stored in the energy storage unit.

In a possible implementation, a charging rate of the first charging current and/or the second charging current ranges between 2C and 10C.

In the embodiment, on the basis of guaranteeing the safety performance of the battery, the charging rate of the first charging current and/or the second charging current ranges from 2C to 10C, so that high-current quick charging may be achieved to increase the charging amount of the battery during a single charging and to achieve quick charging.

In addition, due to the limitation that lithium ions are gathered at a negative electrode in the continuous charging process, the charging current is also limited, and thus quick charging of the battery cannot be achieved by using continuous high current; however, in the embodiment, the battery is charged by using the high current, and the battery is discharged after one-time high-current charging to release the lithium ions gathered at the negative electrode of the battery in the charging process, and then the battery may be subsequently charged by utilizing the high current again, thus achieving quick charging of the battery.

In a possible implementation, a discharging rate of the first discharging current ranges between 0.1C and 1C.

In the embodiment, the discharging rate the first discharging current ranges from 0.1C to 1C to achieve low current discharge, which aims at releasing the lithium ions gathered at the negative electrode of the battery through low-current discharging of the battery without causing excessive loss of charged electric amount in the battery.

In a possible implementation, a ratio of the first accumulative discharging amount threshold to the first accumulative charging amount threshold is less than or equal to 10%.

In the embodiment, the charging amount of the battery in the charging process and the discharging amount of the battery in the discharging process may be better controlled by setting a ratio of an accumulated discharging amount threshold value in the discharging process to an accumulated discharging amount threshold value in the charging process such that the discharging amount is relatively low, and the excessive loss of the charged electric amount in the battery is avoided.

In a possible implementation, at least one of the first charging current, the first discharging current and the second charging current is determined and obtained by the BMS according to a state parameter of the battery; where the state parameter of the battery includes at least one of the following parameters: a battery temperature, a battery voltage, a battery current, a state of charge and a state of health of the battery.

In the embodiment, at least one of the first charging current, the second charging current and the first discharging current is the current determined according to the state parameter of the battery, which may be better adapted to the current state parameter of the battery to improve the charging efficiency and/or discharging efficiency of the battery without damaging the battery.

In a possible implementation, the control unit is specifically configured to: regularly receive the first charging current transmitted by the BMS; and/or regularly receive the first discharging current transmitted by the BMS; and/or regularly receive the second charging current transmitted by the BMS.

In the embodiment, in the process that the charging and discharging apparatus performs a single charging and/or a single discharging on the battery, the charging current and/or discharging current is transmitted by the BMS regularly. On the one hand, the charging current and/or discharging current may be adjusted regularly to improve the charging and discharging efficiency, and on the other hand, the regularly transmitted charging current and/or the discharging current may be used for the charging and discharging apparatus to indicate that the states of the BMS and the battery are normal, so as to facilitate the charging and discharging apparatus to continuously charge the battery or control the discharging of the battery to guarantee the safety performance of the battery.

In a possible implementation, the control unit is further configured to: receiving a first charging voltage transmitted by the BMS, where the first charging voltage and the first charging current are carried in a first BLC message; and/or receiving a first discharging voltage transmitted by the BMS, where the first discharging voltage and the first discharging current are carried in a second BLC message; and/or receiving a second charging voltage transmitted by the BMS, where the second charging voltage and the second charging current are carried in the second BLC message.

In the embodiment, the communication between the BMS and the charging and discharging apparatus may be compatible with a communication protocol between an existing charger and the BMS. Thus, in this way, methods in various embodiments of the present application are easier to implement and promising for application.

In a second aspect, a charging and discharging method is provided. The method is applied to the charging and discharging apparatus in the first aspect or any one of the possible implementations of the first aspect, the charging and discharging apparatus including an AC/DC converter, a first direct current/direct current (DC/DC) converter, a second DC/DC converter and a control unit, where one end of the second DC/DC converter is connected between the first DC/DC converter and the bidirectional AC/DC converter, the other end of the second DC/DC converter is connected to an energy storage unit, and the first DC/DC converter is a bidirectional DC/DC converter.

The method includes: receiving a first charging request transmitted by a battery management system (BMS) of a battery and controlling the bidirectional AC/DC converter and the first DC/DC converter according to the first charging request to charge the battery through an AC power source, and/or controlling the second DC/DC converter and the first DC/DC converter to charge the battery through the energy storage unit, where the first charging request includes a first charging current; receiving a first discharging request transmitted by the BMS and discharging a power of the battery according to the first discharging request, where the first discharging request includes a first discharging current, and the first discharging current is a discharging current transmitted by the BMS when a first accumulative charging amount of the battery is greater than or equal to a first accumulative charging amount threshold and a voltage of a battery cell of the battery does not exceed a full charging voltage of the battery cell; and receiving a second charging request transmitted by the BMS and controlling the bidirectional AC/DC converter and the first DC/DC converter according to the second charging request to charge the battery through the AC power source, and/or controlling the second DC/DC converter and the first DC/DC converter to charge the battery through the energy storage unit, where the second charging request includes a second charging current and the second charging current is a charging current transmitted by the BMS when a first accumulative discharging amount of the battery is greater than or equal to a first accumulative discharging amount threshold.

In a third aspect, a charging and discharging apparatus is provided. The charging and discharging apparatus includes a processor and a memory, where the memory is configured to store a computer program, and the processor is configured to cal the computer program to perform the method in the second aspect or any one of the possible implementations of the second aspect.

In a fourth aspect, a charging and discharging system is provided. The charging and discharging system includes: a BMS of a battery; and, the charging and discharging apparatus in the first aspect or any one of the possible implementations of the first aspect.

### BRIEF DESCRIPTION OF DRAWINGS

To describe the technical solutions in the embodiments of the present application more clearly, the following briefly describes the accompanying drawings required for describing the embodiments of the present application. Apparently, the accompanying drawings in the following description show merely some embodiments of the present application, and a person of ordinary skill in the art may still derive other drawings from these accompanying drawings without creative efforts.
FIG. 1 is an architecture diagram of a charging system to which one embodiment of the present application is applicable;
FIG. 2 is a flowchart interaction diagram of a method for charging a battery in accordance with an embodiment of the present application;
FIG. 3 is a flowchart interaction diagram of another method for charging a battery in accordance with an embodiment of the present application;
FIG. 4 is a schematic waveform diagram of a charging and a discharging current of a battery in accordance with an embodiment of the present application;
FIG. 5 is a flowchart interaction diagram of another method for charging a battery in accordance with an embodiment of the present application;
FIG. 6 is a flowchart interaction diagram of another method for charging a battery in accordance with an embodiment of the present application;
FIG. 7 is a flowchart interaction diagram of another method for charging a battery in accordance with an embodiment of the present application;
FIG. 8 is a flowchart interaction diagram of another method for charging a battery in accordance with an embodiment of the present application;
FIG. 9 is a schematic structural block diagram of a battery management system (BMS) in accordance with an embodiment of the present application;
FIG. 10 is a schematic structural block diagram of a charging and discharging apparatus in accordance with an embodiment of the present application;
FIG. 11 is a schematic structural block diagram of another charging and discharging apparatus in accordance with an embodiment of the present application;
FIG. 12 is a schematic structural block diagram of a power conversion unit in a charging and discharging apparatus in accordance with an embodiment of the present application;
FIG. 13 is a schematic flowchart block diagram of a method for charging a battery in accordance with an embodiment of the present application; and
FIG. 14 is a schematic structural block diagram of an electronic apparatus in one embodiment of the present application.

### DESCRIPTION OF EMBODIMENTS

The embodiments of the present application are further described in detail below in conjunction with the accompanying drawings and the embodiments. The following detailed description of the embodiments and the accompanying drawings serve to illustratively describe the principles of the present application, but are not intended to limit the scope of the present application, i.e., the present application is not limited to the described embodiments.

In the description of the present application, it should be noted that unless otherwise specified, "plurality" means two or more; orientation o positional relationships indicated by the terms "upper," "lower," "left," "right," "inner," "outer," and the like are only for convenience of description and simplification of description rather than indicating or implying that the referenced device or element must have a particular orientation, be constructed and operate in a particular orientation, and thus are not to be construed as limiting the present application. In addition, the terms "first," "second," "third," and the like are used for descriptive purposes only and are not to be construed as indicating or implying relative importance.

In the field of new energy, a power battery may serve as a main power source of an electric device (e.g., vehicles, ships, or spacecrafts), and an energy storage battery may serve as a charge source of the electric device, and the importance of the power battery and the energy storage battery is self-evident. As an example rather than limitation, in some application scenes, the power battery may be a battery in the electric device, and the energy storage battery may be a battery in a charge device. For convenience of description, hereinafter, both the power battery and the energy storage battery may be collectively referred to as a battery.

At present, most batteries in the market are rechargeable storage batteries, and most commonly lithium batteries, such as lithium ion batteries, or lithium ion polymer batteries, and the like. In the charging process, a battery is generally charged in a continuous charging mode, and the continuous charging of the battery may cause lithium precipitation, heating and other phenomena of the battery, where the lithium precipitation, heating and other phenomena can not only reduce the performance of the battery and greatly shorten the cycle life, but also can limit the quick charge capacity of the battery, and possibly cause catastrophic consequences such as combustion and explosion, resulting in serious safety problems.

To guarantee the safety performance of the battery, the present application provides a new method for charging a battery and a charge system.

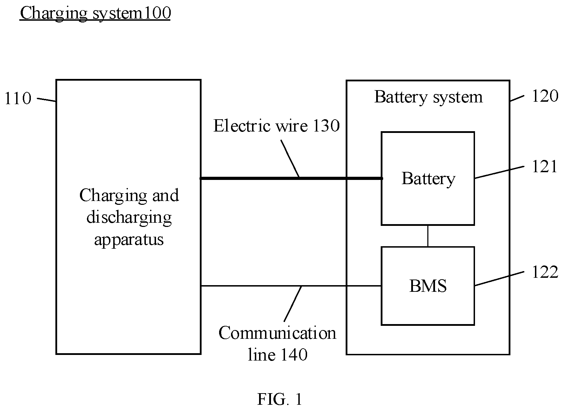

FIG.1 illustrates an architecture diagram of a charge system to which an embodiment of the present application is applicable.

As shown in FIG. 1, the charge system 100 may include: a charging and discharging device 110, and a battery system 120. Alternatively, the battery system 120 may be a battery system in an electric vehicle (including a battery electric vehicle or a plug-in hybrid electric vehicle) or a battery system in other application scene.

Alternatively, at least one battery pack (battery pack) may be arranged in the battery system 120, and the entirety of at least one battery pack may be collectively referred to as battery 121. From the type of the battery, the battery 121 may be any type of batteries, which includes but is not limited to: lithium-ion batteries, lithium metal batteries, lithium-sulfur batteries, lead-acid batteries, nickel-cadmium batteries, nickel-hydrogen batteries, or lithium air batteries. From the size of the battery, the battery 121 in the embodiments of the present application may be a cell/battery cell (cell), or may also be a battery module or a battery pack; the battery module or the battery pack may be formed by connecting a plurality of batteries in parallel or in series. In the embodiments of the present application, the specific type and size of the battery 121 are not limited.

In addition, to intelligently manage and maintain the battery 121, prevent the battery from over charge and over discharge, and prolong the service life of the battery, a battery management system (battery management system, BMS) 122 is also generally provided in the battery system 120 for monitoring a state of the battery 121. Alternatively, the BMS 122 and the battery 121 may be integrally arranged in the same apparatus/device, or, the BMS 122 may also be arranged outside the batter 121 as an independent apparatus/device.

Specifically, the charging and discharging apparatus 110 is a device for supplementing electric energy for the battery 121 in a battery system 120 and/or for controlling the battery 121 to discharge.

Alternatively, the charging and discharging apparatus 110 in the embodiments of the present application may be a normal charge pile, a super charge pipe, a charge pile supporting a vehicle to grid (vehicle to grid, V2G) mode, or a charging and discharging device/apparatus capable of charging and/or discharging the battery. The embodiments of the present application have no limitation on the specific type and specific application scene of the charging and discharging apparatus 110.

Alternatively, as shown in FIG. 1, the charging and discharging apparatus 110 may be connected to the battery 121 through an electric wire 130, and connected to the BMS 122 through a communication line 140, where the communication line 140 is used for achieving information interaction between the charging and discharging apparatus 110 and the BMS.

As an example, the communication line 140 includes but is not limited to a control area network (control area network, CAN) communication bus or a daisy chain (daisy chain) communication bus.

Alternatively, the charging and discharging apparatus 110 may also communicate with the BMS 122 through a wireless network in addition to communicating with the BMS 122 through the communication line 140. The embodiments of the present application have not specific limitation on the type of wired communication or the type of wireless communication between the charging and discharging apparatus and the BMS 122.

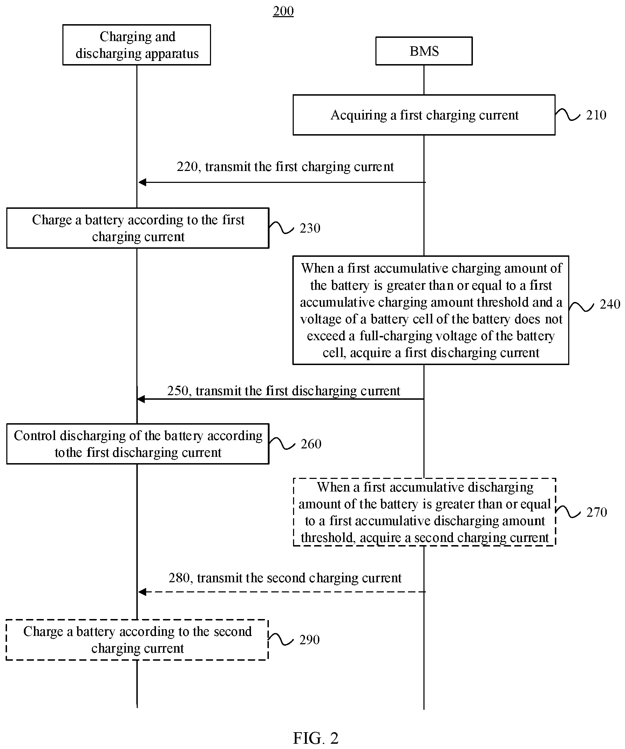

FIG. 2 illustrates a flowchart interaction diagram of a method 200 for charging a battery provided in an embodiment of the present application. Alternatively, the method 200 provided by the embodiments of the present application may be applicable to the charging and discharging apparatus 110 and the battery system 120 shown in FIG. 1.

As shown in FIG. 2, the method 200 for charging the battery may include the following steps.

Step 210: acquiring a first charging current by a BMS.

Step 220: transmitting the first charging current to the charging and discharging apparatus by the BMS.

Step 230: charging the battery according to the first charging current by the charging and discharging apparatus.

Step 240: acquiring a first discharging current by the BMS if a first accumulated charging amount of the battery is greater than or equal to a first accumulated charging amount threshold and a voltage of a battery cell of the battery does not exceed a full charge voltage of the battery cell.

Step 250: transmitting the first discharging current to the charging and discharging apparatus by the BMS.

Step 260: controlling the battery to discharge according to the first discharging current by the charging and discharging apparatus.

In the embodiments of the present application, a charging method capable of being achieved between the charging and discharging apparatus and the BMS is provided. In the process of charging the battery, the charging and discharging apparatus may achieve charging and discharging of the battery according to the first charging current and the first discharging current transmitted by the BMS, continuous charging of the battery is avoided, and therefore the problems of heating, lithium ion aggregation and the like caused by continuous charging of the battery are avoided. As the temperature of the battery rises due to heating, crystals generated by lithium ion aggregation may puncture the battery and cause electrolyte leakage to cause short circuit of the battery, and the temperature rise of the battery, the short circuit of the battery and the like may cause safety problems of the battery, such as battery combustion or explosion. Therefore, with the technical solutions of the embodiments of the present application, the charging and discharging apparatus achieves charging and discharging of the battery according to the first charging current and the first discharging current transmitted by the BMS, thus guaranteeing the safety performance of the battery. In addition, in the process of continuous charging, continuous aggregation of the lithium ions may cause the problem of lithium precipitation, which affects the service life and the charging capacity of the battery; therefore, with the technical solutions of the embodiments of the present application, the service life and the charging capacity of the battery may be guaranteed.

Specifically, in the step 210 to step 230, the BMS may firstly enter a charge mode to control the charging and discharging apparatus to charge the battery. At first, the BMS acquires a first charging current, and the charging and discharging apparatus charges the battery according to the received first charging current after the BMS transmits the first charging current to the charging and discharging apparatus.

Alternatively, the BMS may acquire the first charging current from the own function unit, for example, from a storage unit or a processing unit; or, the BMS may acquire the first charging current from other devices. In some embodiments, the first charging current may be a preset current which may be a fixed value, or may be changed with time according to a preset way. Or, in some other embodiments, the first charging current may be a current determined according to a state parameter of the battery, the first charging current may be changed as the state parameter of the battery change.

Alternatively, the charging and discharging apparatus may be connected to a power source, the power source may be an alternating current (AC) power source and/or a direct current (DC) power source, the charging and discharging apparatus charges the battery through the AC power source and/or the DC power source according to the first charging current after receiving information of the first charging current.

Further, in the process that the charging and discharging apparatus charges the battery according to the first charging current, the BMS may acquire a first accumulated charging amount of the battery and judges whether the first accumulated charging amount is greater than or equal to a first accumulated charging amount threshold or not. If the first accumulated charging amount is greater than or equal to the first accumulated charging amount threshold and a voltage of a battery cell of the battery does not exceed a full charge voltage of the battery cell, the BMS acquires the first discharging current.

Specifically, knowing from the description about the battery in FIG. 1, the battery may include one or more battery cells, the BMS may monitor whether the battery has reached a fully charged state by monitoring a voltage of one or more battery cells in the battery. Alternatively, if the battery includes a plurality of battery cells, voltages of the plurality of battery cells may be different, under this circumstance, whether the battery has reached the fully charged state or not may be judged by judging whether the maximum voltage of the battery cell exceeds the full charge voltage of the battery cell. Or, in other modes, in addition to the maximum voltage of the battery cell, other voltages of the battery cell in the battery may be utilized to judge whether the battery has reached the fully charged state.

On the premise that the voltage of the battery cell of the battery does not exceed the full charge voltage of the battery cell, i.e., the battery does not reach the fully charged state, if the first accumulated charging amount of the battery is greater than or equal to a first accumulated charging amount threshold, the BMS acquires a first discharging current, i.e., the battery is switched to a discharge mode from a charge mode.

Alternatively, the above first accumulated charging amount may be a first accumulated charge capacity or may be a first accumulated charging amount. Correspondingly, if the first accumulated charging amount is the first accumulated charge capacity, the first accumulated charging amount threshold is a first accumulated charge capacity threshold value; if the first accumulated charging amount is the first accumulated charging amount, the first accumulated charging amount threshold is the first accumulated charging amount threshold.

In some embodiments, the first accumulated charging amount threshold may be a preset threshold value, the preset threshold value may be a fixed threshold value, or may be changed with time according to the preset way.

In some other embodiments, the first accumulated charging amount threshold may also be determined according to a state parameter of the battery, i.e., as the state parameter of the battery changes, the first accumulated charging amount threshold may also be changed accordingly. With the embodiment, the first accumulated charging amount threshold may be better adapted to the current state parameter of the battery, thus better controlling the current charging process, and improving the charging efficiency of the battery without damaging and effecting the battery.

Further, in the step 240 to step 260, the BMS acquires a first discharging current, and transmits the first discharging current to the charging and discharging apparatus, and the charging and discharging apparatus controls the battery to discharge according to the received first discharging current.

Alternatively, the BMS may acquire the first discharging current from the own function unit (for example, a storage unit or a processing unit), or the BMS may acquire the first discharging current from other devices. In some embodiments, the first discharging current may be a preset current, the preset current may be a fixed value, or may be changed according to a preset way with the time. Or, in some other embodiments, the first discharging current may be a current determined according to the state parameter of the battery, and the first discharging current may be changed as the state parameter of the battery change. In some embodiments, in the discharge mode or discharge stage, the electricity of the battery may be transmitted to an energy storage device and/or a power grid, thus facilitating the cyclic utilization of the electric energy. The energy storage device may be arranged in the charging and discharging apparatus or may be arranged out of the charging and discharging apparatus, and is intended to make the energy storage device receive the discharging current of the battery. The embodiments of the present application have no limitation on the specific providing of the energy storage device. Alternatively, in the discharge mode, the power of the battery may be consumed in other ways. The embodiments of the present application have no limitation on the specific way of consuming the electric energy.

Further, in the process that the charging and discharging apparatus controls the discharge of the battery, the BMS may acquire a first accumulated discharging amount of the battery in the discharging process, and judge whether the first accumulated discharging amount is greater than or equal to a first accumulated discharging amount threshold.

Alternatively, the above first accumulated discharging amount may be a first accumulated discharge capacity or may be a first accumulated discharging amount. Correspondingly, if the first accumulated discharging amount is the first accumulated discharge capacity, the first accumulated discharging amount threshold is a first accumulated discharge capacity threshold value, and if the first accumulated discharging amount is the first accumulated discharging amount, the first accumulated discharging amount threshold is the first accumulated discharge electric amount threshold.

In some embodiments, the first accumulated discharging amount threshold may be a preset threshold value, the preset threshold value may be a fixed threshold value, or may be changed with time according to a preset way.

In some other embodiments, the first accumulated discharging amount threshold may be determined according to the state parameter of the battery, i.e., as the state parameter of the battery changes, the first accumulated discharging amount threshold is changed accordingly. Through the embodiments, the first accumulated discharging amount threshold may be better adapted to the current state parameter of the battery, thus better controlling the current discharging process and improving the discharging efficiency of the battery without damaging the battery.

When the first accumulated discharging amount is greater than or equal to the first accumulated discharging amount threshold, the charging and discharging apparatus controls the battery to stop discharging.

With above processes, the charge and the discharge of the battery are achieved by the charging and discharging apparatus according to the first charging current and the first discharging current transmitted by the BMS, thus avoiding the problems of heating, lithium ion aggregation, and the like of the battery caused by continuous charging, and then avoiding the safety problems, such as battery combustion or explosion, of the battery caused by the problems of heating, lithium ion aggregation and the like, and the safety performance of the battery is guaranteed. In addition, after the battery is charged to a first accumulated charging amount according to the first charging current and then the power of the battery is released to a first accumulated discharging amount according to the first discharging current, lithium ions gathered at a negative electrode of the battery in charging process may be released, and problem of lithium precipitation generated in continuous charging is prevented, thus prolonging the service life of the battery and improving the charge capacity of the battery.

For the charge of the battery, after one charge and one discharge, the battery may continue to be charged for a second time to continue to charge the battery.

Alternatively, as shown in FIG. 2, the method 200 for charging the battery in the embodiments of the present application further includes the following steps.

Step 270: acquiring a second charging current by the BMS if the first accumulated discharging amount of the battery is greater than or equal to the first accumulated discharging amount threshold.

Step 280: transmitting the second charging current to the charging and discharging apparatus by the BMS.

Step 290: charging the battery according to the second charging current by the charging and discharging apparatus.

Specifically, in the step 270 to step 290, when the BMS judges that the first accumulated discharging amount of the battery is greater than or equal to the first accumulated discharging amount threshold, the BMS acquires the second charging current, and transmits the second charging current to the charging and discharging apparatus. The charging and discharging apparatus continues to charge the battery according to the received second charging current, i.e., for the battery, the battery reenters the charge mode from the discharge mode. Alternatively, other related technical solutions of the step 270 to step 290 may refer to above related description of the step 210 to step 230 and will not be described in detail here.

It may be understood that in the embodiments of the present application, the charge and the discharge of the battery require voltage information required by the charge and the discharge in addition to the current information required by the charge and the discharge. For example, in the step 210 to step 230: acquiring, by the BMS, the first charging current and a first charge voltage and transmitting the first charging current and the first discharging current to the charging and discharging apparatus, where the charging and discharging apparatus is configured to charge the battery according to the first charging current and the first charge voltage; in the step 240 to step 260, acquiring, by the BMS, the first discharging current and a first discharging voltage and transmitting the first discharging current and the first discharging voltage to the charging and discharging apparatus, where the charging and discharging apparatus is configured to discharge the battery according to the first discharging current and the first discharging voltage. The subsequent charging and discharging process may be similar to the above charging and discharging process and will not be described in detail.

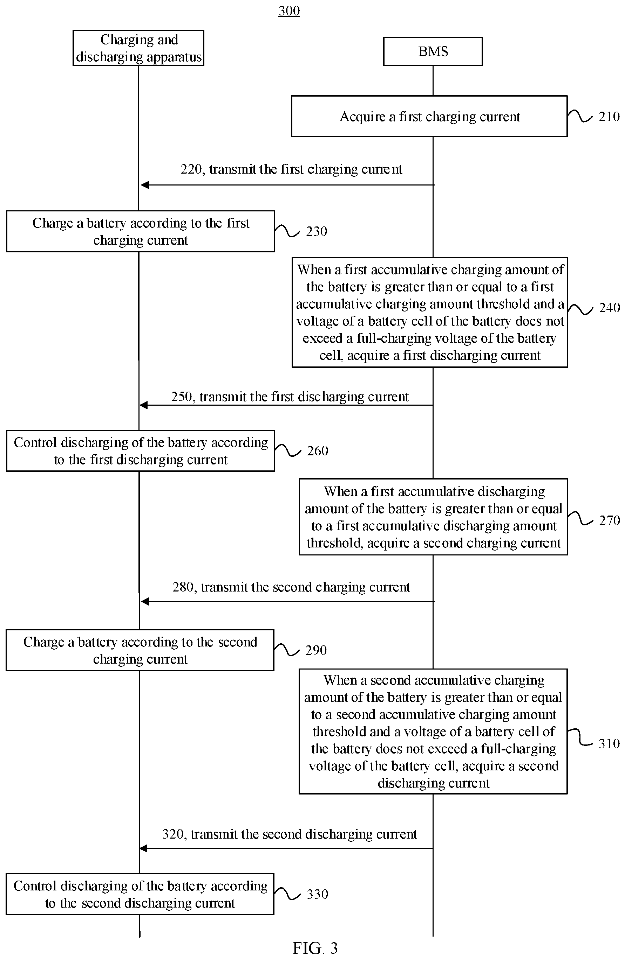

FIG. 3 illustrates a flowchart interaction diagram of another method 300 for charging a battery provided in an embodiment of the present application.

As shown in FIG. 3, except the above step 210 to step 290, the method 300 for charging the battery further includes the following steps.

Step 310: acquiring the second discharging current by the BMS if a second accumulated discharging amount of the battery is greater than or equal to a second accumulated charging amount threshold and a voltage of a battery cell of the battery does not exceed a full charge voltage of the battery cell.

Step 320: transmitting the second discharging current to the charging and discharging apparatus by the BMS.

Step 330: controlling the battery to discharge according to the second discharging current by the charging and discharging apparatus.

In the embodiments of the present application, the charge, discharge, recharge, and re-discharge of the battery are completed through information interaction between the BMS and the charging and discharging apparatus. According to this way, the embodiments of the present application may further provide a multi-cycle charging and discharging method, the charging and discharging processes are sequentially and cyclically carried out to gradually charge the battery on the basis of ensuring the safety performance of the battery.

Specifically, in the step 310, when the charging and discharging apparatus is in the process of charging the battery according to the second charging current, the BMS may acquire a second accumulated charging amount of the battery, and may judge whether the second accumulated charging amount is greater than or equal to the second accumulated charging amount threshold.

Alternatively, the second accumulated charging amount may only be a charging amount to the battery by the charging and discharging apparatus according to the second charging current, or, the second accumulated charging amount may also be a current total charging amount of the battery. As an example, the current total charging amount of the battery = the charging amount according to the first charging current + the charging amount according to the second charging current - the discharging amount according to the first discharging current. Correspondingly, the second accumulated charging amount threshold may also be a charging amount threshold according to the single charging, or the second accumulated charging amount threshold may also be a charging amount threshold according to the total charging amount.

Similar to the first accumulated charging amount and the first accumulated charging amount threshold descried above, in the embodiments of the present application, the second accumulated charging amount may be a second accumulated charge capacity or may also be a second accumulated charging amount. Correspondingly, if the second accumulated charging amount is the second accumulated charge capacity, the first accumulated charging amount threshold is the second accumulated charge capacity threshold value; if the second accumulated charging amount is the second accumulated charging amount, the second accumulated charging amount threshold is the second accumulated charging amount threshold.

Alternatively, in some embodiments, the second accumulated charging amount threshold may be a preset threshold value. The preset threshold value may be a fixed threshold value, or may be changed with time according to the preset way.

In some other embodiments, the second accumulated charging amount threshold may also be determined according to a state parameter of the battery, i.e., when the state parameter of the battery changes, the second accumulated charging amount threshold is changed accordingly.

Further, in the step 310, when the second accumulated charging amount is greater than or equal to the second accumulated charging amount threshold, and the voltage of the battery cell of the battery does not exceed the full charge voltage of the battery cell, the BMS acquires the second discharging current. In the step 320 to step 330, the BMS transmits the second discharging current to the charging and discharging apparatus, and the charging and discharging apparatus controls the battery to discharge according to the received second discharging current.

Specifically, other related technical solutions in the above steps may refer to the related description in the step 240 to step 260, and will not be described in detail here.

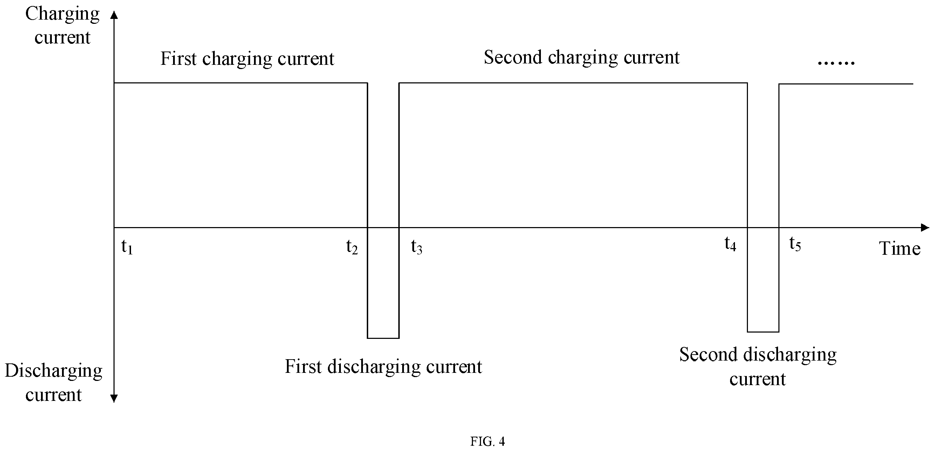

As an example, the FIG.4 illustrates a schematic oscillogram of a charging current and a discharging current of a battery provided in an embodiment of the present application.

As shown in FIG. 4, from the time period t1 to t2, the charging and discharging apparatus charges the battery according to the first charging current until the first accumulated charging amount of the battery is greater than or equal to the first accumulated charging amount threshold and the voltage of the battery cell of the battery does not exceed the full charge voltage of the battery cell. From the time period t2 to t3, the charging and discharging apparatus controls the battery to discharge according to the first discharging current until the first accumulated discharging amount of the battery is greater than or equal to the first accumulated discharging amount threshold. Alternatively, the duration of the first discharging current may be less than the duration of the first charging current. From the time period t3 to t4, the charging and discharging apparatus continues to charge the battery according to the second charging current until the second accumulated charging amount of the battery is greater than or equal to the second accumulated charging amount threshold and the voltage of the battery cell of the battery does not exceed the full charge voltage of the battery cell. From the time period t4 to t5, the charging and discharging apparatus controls the battery to discharge according to the second discharging current until the second accumulated discharging amount of the battery is greater than or equal to the second accumulated discharging amount threshold. Alternatively, the duration of the second charging current may be less than the duration of the first charging current. It may be understood that the charging and discharging processes are continued until the battery is fully charged.

It should be noted that FIG. 4 only schematically illustrates oscillogram of a first charging current, a second charging current, a first discharging current, and a second discharging current. The first charging current may be a constant current shown in FIG. 4 from t1 to t2, or may also be a variable current changed with time. Similarly, the second charging current, the first discharging current and the second discharging current may be the constant current shown in FIG. 4, or may also be the variable current changed with time. Furthermore, the first charging current and the second charging current schematically shown in FIG. 4 are same in magnitude, and the first discharging current and the second discharging current are same in magnitude; in addition to this, the first charging current and the second charging current may also be different in magnitude, the first discharging current and the second discharging current may also be different in magnitude, and the embodiments of the present application have no specific limitation on this.

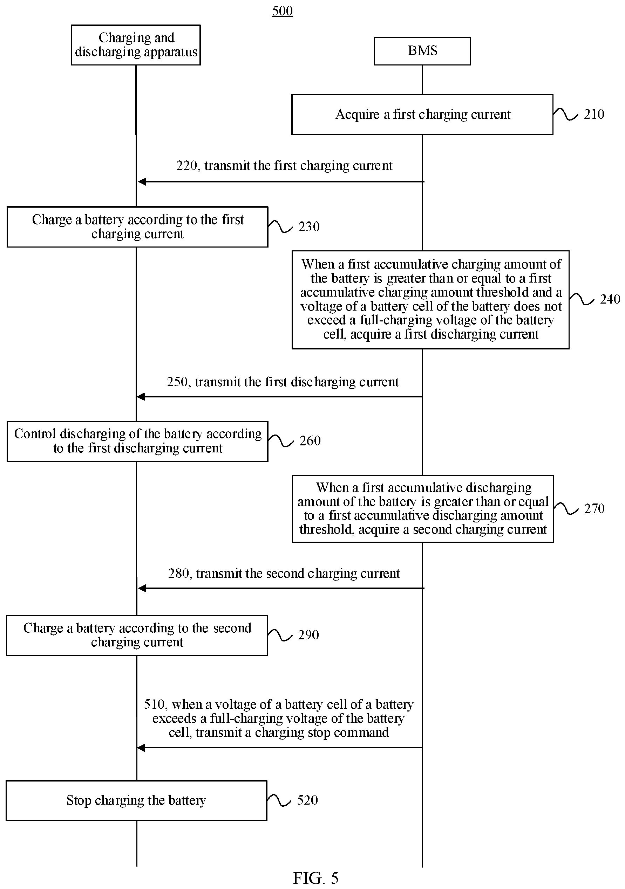

FIG. 5 illustrates a flowchart interaction diagram of another method 500 for charging a battery provided in an embodiment of the present application.

As shown in FIG. 5, except the above step 210 to step 290, the method 500 for charging the battery further includes the following steps.

Step 510: transmitting a charging stop command to the charging and discharging apparatus by the BMS if the voltage of the battery cell of the battery exceeds the full charge voltage of the battery cell.

Step 520, stopping charging the battery by the charging and discharging apparatus.

Specifically, as described above, the BMS may monitor whether a battery has reached a fully charged state by monitoring the voltage of one or more battery cells in the battery. Alternatively, in some embodiments, whether the battery has reached the fully charged state may be judged by judging whether the maximum voltage of the battery cell exceeds the full charge voltage of the battery cell. When the maximum voltage of the battery cell exceeds the full charge voltage of the battery cell, the battery has reached the fully charged state, and the BMS transmits the charging stop command to the charging and discharging apparatus at the moment, where the charging stop command is used for instructing the charging and discharging apparatus to stop charging the battery, thus making the charging and discharging apparatus stop charging the battery.

Alternatively, the step 510 and the step 520 may be performed at the charge stage of the battery, in other words, after the BMS enters a charge mode and the charging and discharging receives the charging current transmitted by the BMS, in the process of charging the battery, the BMS may acquire the voltage of the battery cell of the battery to judge whether the battery has reached the fully charged state. Once the voltage of the battery cell of the battery exceeds the full charge voltage of the battery cell, the BMS transmits the charging stop command to the charging and discharging apparatus to make the charging and discharging apparatus stop charging the battery.

Therefore, FIG. 5 only schematically illustrates that the step 510 and step 520 are performed after the step 290, i.e. performed in the process of the second charge. It may be understood that the step 510 and step 520 may also be performed during any one of the plurality of charging and discharging.

Alternatively, in the embodiments of above method, due to the fact that the charging and discharging apparatus is configured to charge, discharging and recharging the battery, the safety problem of the battery caused by continuous charging may be prevented. Further, the charging current in the method may be a high current to improve the charging amount of the battery in the single charging process, thus achieving the purpose of quick charge.

Moreover, due to limitation that lithium ions are gathered at a negative electrode in the continuous charging process, the charging current is also limited, and thus quick charge of the battery cannot be achieved by using continuous high current. However, provided in the technical solution of the embodiments of the present application, the battery is charged by using the high current, and the battery is discharged after one-time high-current charging to release the lithium ions gathered at the negative electrode of the battery in the charging process, and then the battery can be subsequently charged by utilizing the high current again, thus achieving quick charge of the battery.

Specifically, in the above method, the first charging current and/or the second charging current may be a high current; in addition, after the charging and discharging apparatus charges the battery according to the second charging current, the charging current in the subsequent charging process may also be the high current.

Alternatively, to achieve quick charge of the high current, a charging rate of the first charging current and/or the second charging current ranges from 2C to 10C.

Further, the discharging current in the embodiments of the present application may be low current, which aims at releasing lithium ions gathered at the negative electrode of the battery through low-current discharging of the battery without causing excessive loss of charging amount in the battery.

Specifically, the first discharging current and/or the second discharging current may be a low current; in addition, after the charging and discharging apparatus discharges the battery according to the second discharging current, the discharging current in the subsequent discharging process may also be the low current.

Alternatively, to achieve low-current discharging, a charging rate of the first discharging current and/or the second discharging current ranges from 0.1C to 1C.

Alternatively, in the above method, to control the charging amount of the battery in the charging process and the discharging amount of the battery in the discharging process battery, a ratio of an accumulated discharging amount threshold in the discharging process to an accumulated charge threshold value in the charging process may be provided to make the discharging amount be relatively small, without causing excessive loss of charging amount in the battery.

As an example, in the above method, a ratio of the first accumulated discharging amount threshold to the first accumulated charge threshold value is less than or equal to 10%, and/or, a ratio of the second accumulated discharging amount threshold to the second accumulated charge threshold value is less than or equal to 10%,

In addition to this, after the charging and discharging apparatus charges the battery and controls the battery to discharge respectively according to the second charging current and the second discharging current, a ratio of an accumulated discharging amount threshold to an accumulated charging amount threshold in the subsequent charging and discharging process may also be less than or equal to 10%.

It should be noted that, the ratio of 10% may also be adjusted with the change of the application scene and the application demand, and the present application has no limitation on the specific value of the ratio.

Alternatively, in the embodiments of the above method, the first charging current and the second charging current acquired by the BMS may be same or different. The first charging current and/or the second charging current may be a preset current, or, the first charging current and/or the second charging current may also be a current determined according to a state parameter of the battery; when the state parameter of the battery changes, the first charging current and/or the second charging current may be different currents corresponding to different state parameters. The state parameter of the battery includes at least one of the following parameters: a battery temperature, a battery voltage, a battery current, a state of charge (state of charge, SOC) of the battery, a state of health (state of health, SOH) of the battery and the like.

Similarly, the first discharging current and the second discharging current acquired by the BMS may be same or different. The first discharging current and/or the second discharging current may be a preset current, or, the first discharging current and/or the second discharging current may also be a current determined according to the state parameter of the battery;

If at least one of the first charging current, the second charging current, the first discharging current and the second discharging current is the current determined according to the state parameter of the battery, the current may be better adapted to the current state parameter of the battery to improve the charging efficiency and/or discharging efficiency of the battery without damaging the battery.

In addition to this, after the charging and discharging apparatus charges the battery and controls the battery to discharge according to the second charging current and the second discharging current, the charging current and/or the discharging current in the subsequent charging and discharging process may also be the preset current, or may also be the current determined according to the state parameter of the battery.

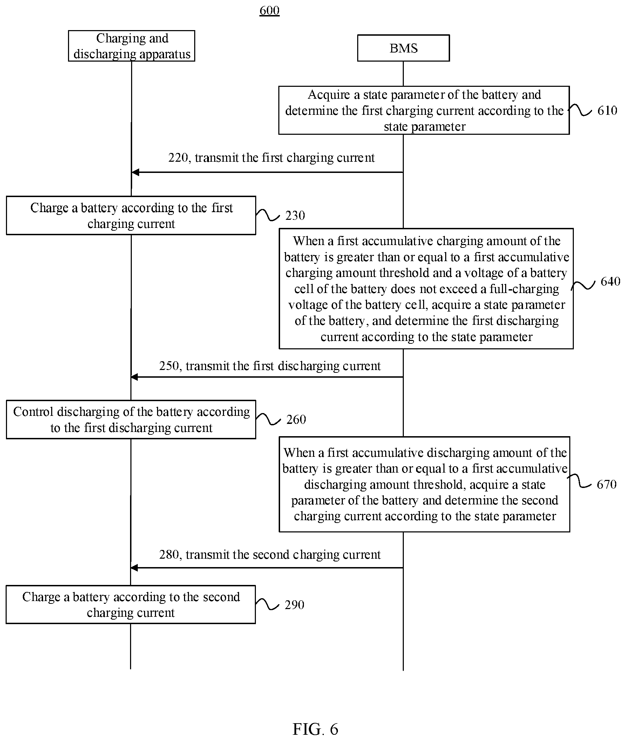

FIG. 6 illustrates a flowchart interaction diagram of another method 600 for charging a battery provided in an embodiment of the present application.

According to the method 200 shown in FIG. 2, as shown in FIG. 6, the above step 210 may include:
step 610: acquiring the state parameter of the battery by the BMS, and determining the first charging current according to the state parameter.

The above step 240 may include:
step 640: acquiring the state parameter of the battery by the BMS, and determining the first discharging current according to the state parameter if the first accumulated charging amount of the battery is greater than or equal to the first accumulated charging amount threshold and the voltage of the battery cell of the battery does not exceed the full charge voltage of the battery cell.

The above step 270 may include:
step 670: acquiring the state parameter of the battery by the BMS, and determining the second charging current according to the state parameter if the first accumulated discharging amount of the battery is greater than or equal to the first accumulated discharging amount threshold.

In addition to this, other steps of the method 600 in the embodiments of the present application may refer to the related description of the embodiments shown in FIG. 2, and will not be described in detail here.

Specifically, in the embodiments of the present application, the first charging current, the first discharging current and the second charging current are all current determined according to the state parameter of the battery. In different time periods, the BMS may acquire different state parameters of the battery, and may determine the current charging current and discharging current according to the state parameters.

Alternatively, the determination of the charging current and the discharging current according to the state parameter of the battery may be achieved in various ways. As one example, a mapping relation between the state parameter of the battery and the charging current and the discharging current may be obtained, and the specific charging current and the specific discharging current are determined through the state parameter of the battery according to the mapping relation. The mapping relation may be a mapping relation obtained through fitting of a large amount of experimental data, with high credibility and accuracy; and specifically, the mapping relation may be a mapping table, a mapping graph or a mapping formula and the like. In addition, in other examples, a dedicated neural network model may be trained according to a large amount of experimental data, and the neural network model may output the charging current and the discharging current according to input state parameter of the battery.

Alternatively, in addition to the charging current and the discharging current, in the embodiments of the above method, the first accumulated charging amount threshold and the second accumulated charging amount threshold may be same or different. The first accumulated discharging amount threshold and the second accumulated discharging amount threshold may be same or different. At least one of the first accumulated charging amount threshold, the second accumulated charging amount threshold, the first accumulated discharging amount threshold and the second accumulated discharging amount threshold may be a preset threshold value. Or, at least one of the first accumulated charging amount threshold, the second accumulated charging amount threshold, the first accumulated discharging amount threshold and the second accumulated discharging amount threshold may also be a threshold value determined according to the state parameter of the battery.

In addition to this, after the charging and discharging apparatus charges the battery and controls the battery to discharge according to the second charging current and the second discharging current, the accumulated discharging amount threshold and the accumulated charging amount threshold in the subsequent charging and discharging process may be a preset threshold value, or may also be the threshold value based on the state parameter of the battery.

Through the embodiments of the present application, if at least one of the first accumulated charging amount threshold, the second accumulated charging amount threshold, the first accumulated discharging amount threshold and the second accumulated discharging amount threshold is a threshold value determined according to the state parameter of the battery, the threshold value may be adapted to the current state parameters of the battery better to control the current charging process and/or discharging process, the charging amount and the discharging amount are guaranteed, and the efficient charge of the battery is achieved.

Alternatively, in the embodiments of the above method, at least one of the first charging current, the second charging current, the first discharging current and the second discharging current may be a current acquired by the BMS regularly or irregularly. As an example, at least one of the first charging current, the second charging current, the first discharging current and the second discharging current may be the current determined by the BMS regularly or irregularly according to the state parameters of the battery, and the current is changed with the change of the state parameter of the battery. Specifically, the BMS may acquire the state parameters of the battery regularly to determine at least one of the first charging current, the second charging current, the first discharging current and the second discharging current. Or the BMS acquires the state parameters of the battery in real time; when the state parameter changes irregularly, the BMS determines at least one of the first charging current, the second charging current, the first discharging current and the second discharging current according to the irregularly changed state parameters.

Further, on this basis, the BMS transmits at least one of the first charging current, the second charging current, the first discharging current and the second discharging current to the charging and discharging apparatus regularly or irregularly, thus making the charging and discharging apparatus charge the battery or control the battery to discharge according to the regularly transmitted current.

In the implementation mode, in the process that the charging and discharging apparatus performs a single charging and/or single discharging on the battery, the charging current and/or the discharging current are transmitted by the BMS regularly or irregularly. On the one hand, the charging current and/or discharging current may be adjusted regularly or irregularly through the implementation mode to improve the charging and discharging efficiency, and on the other hand, the charging current and/or the discharging current transmitted regularly or irregularly indicate that the states of the BMS and the battery are normal, and the charging and discharging apparatus may continue to charge the battery or control the battery to discharge. Therefore, in the implementation mode, if the charging and discharging apparatus does not receive the charging current and/or the discharging current transmitted by the BMS regularly or irregularly, the charging and discharging apparatus may stop charging the battery and/or stop controlling the battery to discharge, thus guaranteeing the safety performance of the battery.

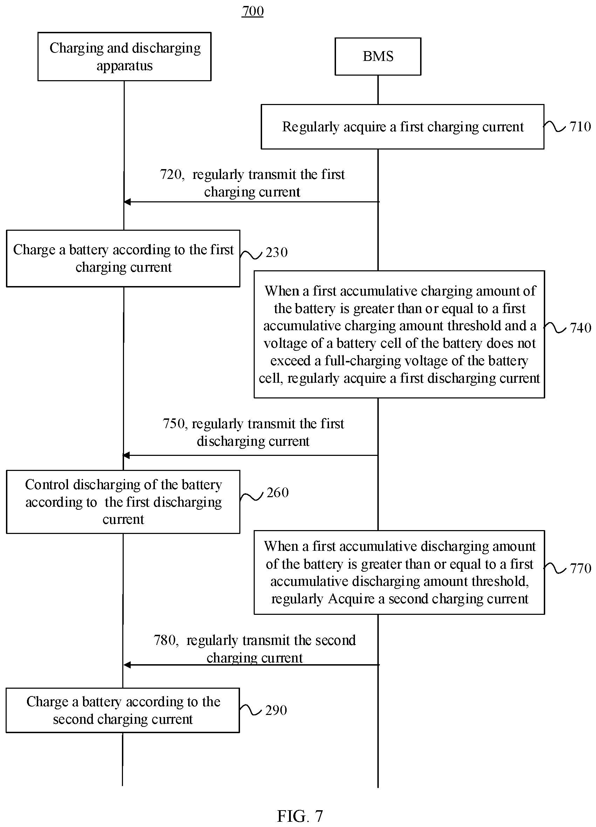

FIG. 7 illustrates a flowchart interaction diagram of another method 700 for charging a battery provided in an embodiment of the present application.

According to the method 200 show in FIG. 2, as shown in FIG. 7, the step 210 may include:
step 710: regularly acquiring the first charging current by the BMS.

The step 220 may include:
step 720: regularly transmitting the first charging current to the charging and discharging apparatus by the BMS.

The step 240 may include:
step 740: regularly acquiring the first discharging current if a first accumulated charging amount of the battery is greater than or equal to a first accumulated charging amount threshold and a voltage of a battery cell of the battery does not exceed a full charge voltage of the battery cell.

The step 250 may include:
step 750: regularly transmitting the first discharging current to the charging and discharging apparatus by the BMS.

The step 270 may include:
Step 770: regularly acquiring the second charging current if a first accumulated discharging amount of the battery is greater than or equal to a first accumulated discharging amount threshold.

The step 280 may include:
step 780: regularly transmitting the second charging current to the charging and discharging apparatus by the BMS.

In addition to this, other steps of the method 700 in the embodiments of the present application may refer to the related description of the embodiments shown in FIG. 2, and will not be described in detail here.

In the embodiments of the present application, the BMS may regularly acquire the first charging current, the first discharging current, and the second charging current. Correspondingly, the BMS may regularly transmit the first charging current, the first discharging current and the second charging current to the charging and discharging apparatus.

It should be understood that in the embodiments, the charging and discharging of the battery require voltage information required by charging and discharging in addition to the current information required by charging and discharging, and the acquisition way of the voltage required by charging and discharging has no any limitation on the embodiments of the present application.

Alternatively, in the above embodiments of the method, the communication between the BMS and the charging and discharging apparatus may be compatible with a communication protocol between an existing charger and the BMS, and thus the communication between the BMS and the charging and discharging apparatus is convenient to achieve, and the good application prospect is provided.

Specifically, on the basis of the above embodiments of the method, the BMS may also acquire at least one of a first charge voltage, a second charge voltage, a first discharging voltage, and a second discharging voltage, and transmits at least one of the first charge voltage, the second charge voltage, the first discharging voltage and the second discharging voltage to the charging and discharging apparatus, where the first charging current and the first charge voltage are carried in a first battery charge demand message (BCL message), and/or, the first discharging current and the first discharging voltage are carried in a second BLC message, and/or, the second charging current and the second charge voltage are carried in a third BCL message, and/or, the second discharging current and the second discharging voltage are carried in a fourth BCL message.

In addition to this, after the charging and discharging apparatus charges the battery and controls the battery to discharge according to the second charging current and the second discharging current, the charging current, the charge voltage, the discharging current and the discharging voltage in the subsequent charging and discharging process may also be carried in the BCL message and transmitted to the charging and discharging apparatus by the BMS.

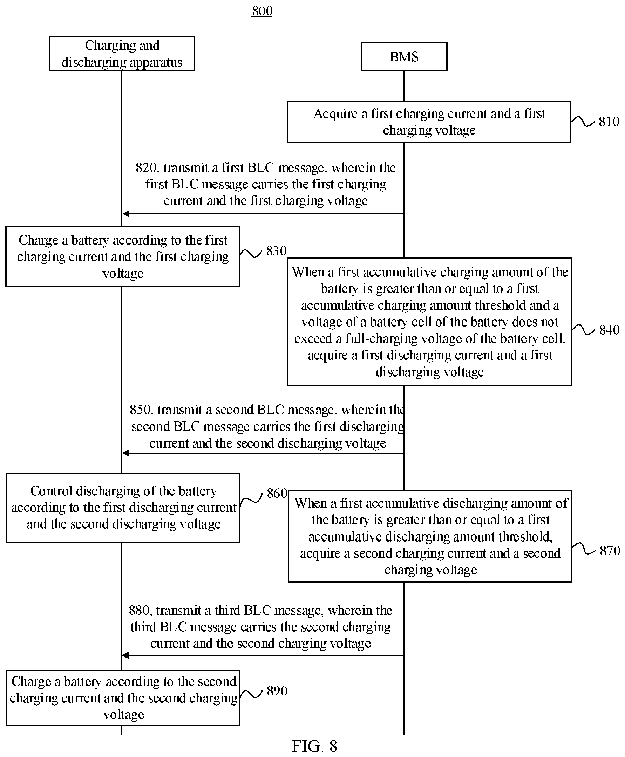

FIG. 8 illustrates a flowchart interaction diagram of another method 800 for charging a battery provided in an embodiment of the present application.

As shown in FIG. 8, the method 800 for charging the battery may include the following steps.

Step 810: acquiring the first charging current and the first charge voltage by the BMS.

Step 820: transmitting the first BCL message to the charging and discharging apparatus by the BMS, the first BCL message carrying the first charging current and the first charge voltage.

Step 830: charging the battery by the charging and discharging apparatus according to the first charging current and the first charge voltage.

Step 840: acquiring the first discharging current and the first discharging voltage by the BMS if a first accumulated charging amount of the battery is greater than or equal to a first accumulated charging amount threshold and a voltage of a battery cell of the battery does not exceed a full charge voltage of the battery cell.

Step 850: transmitting the second BCL message to the charging and discharging apparatus by the BMS, the second BCL message carrying the first discharging current and the second discharging voltage.

Step 860: controlling the battery to discharge by the charging and discharging apparatus according to the first discharging current and the second discharging voltage.

Step 870: acquiring the second charging current and the second charge voltage by the BMS if a first accumulated discharging amount of the battery is greater than or equal to a first accumulated discharging amount threshold.

Step 880: transmitting the third BCL message to the charging and discharging apparatus by the BMS, the third BCL message carrying the second charging current and the second charge voltage.

Step 890: charging the battery by the charging and discharging apparatus according to the second charging current and the second charge voltage.

In the embodiments of the present application, by utilizing the battery charge demand BCL message in a communication protocol between an existing charger and the BMS, the BMS transmits the charging current and the discharging current to the charging and discharging apparatus, and the charging and discharging apparatus charges the battery or controls the battery to discharge according to the received charging current and the discharging current.

Alternatively, in the BCL message, the charge voltage (including the first charge voltage and the second charge voltage) and the discharging voltage (including the first discharging voltage and the second discharging voltage) are different in range, and the charging current (including the first charging current and the second charging current) and the discharging current (including the first discharging current and the second discharging current) are different in range. In the BCL message received by the charging and discharging apparatus, whether the voltage and current belong to the charge voltage and charging current or the discharging voltage and the discharging current may be judged through the magnitude of the voltage and the current carried in the BCL message.

Alternatively, the BMS may determine the charge voltage and the discharging voltage according to the state parameter of the battery, or the charge voltage and the discharging voltage may also be a preset voltage value.

Alternatively, in some embodiments, the BMS may regularly acquire the charging current and the discharging current and regularly transmit a BCL message carrying the charging current and the charge voltage to the charging and discharging apparatus. Similarly, the BMS may also regularly acquire the discharging current and the discharging voltage, and regularly transmit the BCL message carrying the discharging current and the discharging voltage to the charging and discharging apparatus. In the embodiment, the regular transmitting way of the BCL message may be same as that of the BCL message in an existing standard.

In the above embodiment, an information interaction message of charge and discharging current and/or voltage is used as an example for explanation, and it may be understood that in order to achieve charging and discharging of the battery, in addition to processing at the charging and discharging stage, handshake interaction between a vehicle and a charger before charging and discharging, parameter configuration interaction of charging and discharging and the like may be included; the embodiments of the present application have no specific limitation on this.

Alternatively, the communication protocol between the charger and the BMS includes a communication protocol under a vehicle to grid (vehicle to grid, V2G) mode and a grid to vehicle (grid to vehicle, G2V) mode.

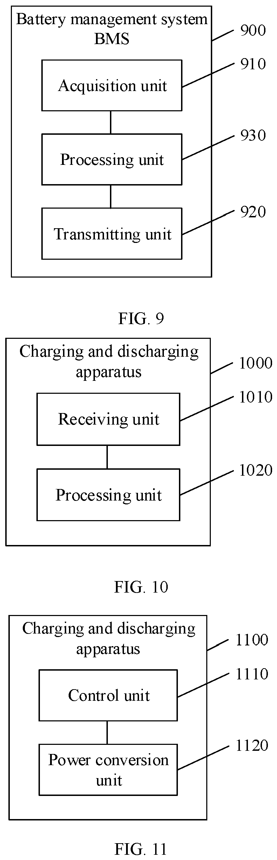

Specific embodiments of the method for charging the battery provided herein are described above in conjunction with FIG. 2 to FIG. 8, and specific embodiments of related devices provided herein are described below in conjunction with FIG. 9 to FIG. 12, it may be understood that the related descriptions in the following device embodiments may refer to the aforementioned method embodiments and are not described in detail for brevity.

FIG. 9 illustrates a schematic structure block diagram of a battery management system BMS 900 provided in one embodiment of the present application. As shown in FIG. 9, the BMS 900 includes an acquisition unit 910, a transmitting unit 920, and a processing unit 930.

In one embodiment of the present application, the acquisition unit 910 is configured to acquire a first charging current; a transmitting unit 920 is configured to transmit the first charging current to a charging and discharging device, thus making the charging and discharging apparatus charge the battery according to the first charging current; the processing unit 930 is configured to determine that the acquisition unit 910 is further configured to acquire a first discharging current when a first accumulated charging amount of the battery is greater than or equal to a first accumulated charging amount threshold and a voltage of a battery cell of the battery does not exceed a full charge voltage of the battery cell; the transmitting unit 920 is further configured to transmit the first discharging current to the charging and discharging apparatus, thus making the charging and discharging apparatus control the battery to discharge according to the first discharging current; alternatively, the processing unit 930 is further configured to determine that the acquisition unit 910 is further configured to acquire a second charging current when a first accumulated discharging amount of the battery is greater than or equal to a first accumulated discharging amount threshold; and the transmitting unit 920 is further configured to transmit the second charging current to the charging and discharging apparatus, thus making the charging and discharging apparatus charge the battery according to the second charging current.

Alternatively, the processing unit 930 is further configured to determine that the acquisition unit 910 is further configured to acquire a second discharging current when a second accumulated charging amount of the battery is greater than or equal to the second accumulated charging amount threshold and the voltage of the battery cell of the battery does not exceed the full charge voltage of the battery cell; the transmitting unit 920 is further configured to transmit the second discharging current to the charging and discharging apparatus, thus making the charging and discharging apparatus control the battery to discharge according to the second discharging current.

Alternatively, the processing unit 930 is further configured to determine that the voltage of the battery cell of the battery exceeds the full charge voltage of the battery cell, and the transmitting unit 920 is further configured to transmit a charging stop command to the charging and discharging apparatus, the charging stop command being used for instructing the charging and discharging apparatus to stop charging the battery.

Alternatively, a charging rate of the first charging current and/or the second charging current ranges from 2C to 10C.

Alternatively, a discharging rate of the first discharging current and/or the second discharging current ranges from 0.1C to 1C.

Alternatively, a ratio of the first accumulated discharging amount threshold to the first accumulated charging amount threshold is less than or equal to 10%, and/or, a ratio of the second accumulated discharging amount threshold to the second accumulated charging amount threshold is less than or equal to 10%.

Alternatively, the acquisition unit 910 is configured to acquire state parameters of the battery and determining the first charging current according to the state parameters; and/or, the acquisition unit 910 is configured to acquire the state parameters of the battery and determining the first discharging current according to the state parameters; and/or, the acquisition unit 910 is configured to acquire the state parameters of the battery and determining the first discharging current according to the state parameters; where the state parameters of the battery include at least one of the following parameters: a battery temperature, a battery voltage, a battery current, a state of charge of the battery, and a state of health of the battery.

Alternatively, the acquisition unit 910 is configured to acquire the first discharging current, the transmitting unit 920 is configured to regularly transmit the first discharging current to the charging and discharging apparatus; and/or, the acquisition unit 910 is configured to regularly acquire the first discharging current, and the transmitting unit 920 is configured to regularly transmit the first discharging current to the charging and discharging apparatus; and/or, the acquisition unit 910 is configured to regularly acquire the second charging current, and the transmitting unit 920 is configured to transmit the second charging current to the charging and discharging apparatus.

Alternatively, the acquisition unit 910 is further configured to acquire the first charge voltage, the transmitting unit 920 is configured to transmit the first charge voltage to the charging and discharging apparatus, where the first charging current and the first charge voltage are carried in a first battery charge demand BCL message; and/or, the acquisition unit 910 is further configured to acquire the first discharging voltage, the transmitting unit 920 is further configured to transmit the first discharging voltage to the charging and discharging apparatus, where the first discharging current and the first discharging voltage are carried in a second BCL message; and/or, the transmitting unit 920 is further configured to acquire the second charge voltage, and the transmitting unit 920 is further configured to transmit the second charge voltage to the charging and discharging apparatus, where the second charging current and the second charge voltage are carried in a third BCL message; and/or, the acquisition unit 910 is further configured to acquire the second discharging voltage, and the transmitting unit 920 is further configured to transmit the second discharging voltage to the charging and discharging apparatus, where the second discharging current and the second discharging voltage are carried in a fourth BCL message.

FIG. 10 illustrates a schematic structure block diagram of a charging and discharging device 1000 of one embodiment of the present application. As shown in FIG. 10, the charging and discharging apparatus 1000 includes a receiving unit 1010 and a processing unit 1020.

In one embodiment of the present application, the receiving unit 1010 is configured to receive a first charging current transmitted by a battery management system (BMS); a processing unit 1020 is configured to charge a battery according to the first charging current; the receiving unit 1010 is further configured to receive a first discharging current transmitted by the BMS, the processing unit 1020 is further configured to control the battery to discharge according to the first discharging current, where the first discharging current is a discharging current transmitted by the BMS when a first accumulated charging amount of the battery is greater than or equal to a first accumulated charging amount threshold and a voltage of a battery cell of the battery does not exceed a full charge voltage of the battery cell; and the receiving unit 1010 is further configured to receive a second charging current transmitted by the BMS, and the processing unit 1020 is further configured to charge the battery according to the second charging current, where the second charging current is a charging current transmitted by the BMS when a first accumulated discharging amount of the battery is greater than or equal to a first accumulated discharging amount threshold.

Alternatively, the receiving unit 1010 is further configured to receive a second discharging current transmitted by the BMS, the processing unit 1020 is further configured to control the battery to discharge according to the second discharging current, where the second discharging current is a discharging current transmitted by the BMS when a second accumulated discharging amount of the battery is greater than or equal to a second accumulated discharging amount threshold and the voltage of the battery cell of the battery does not exceed the full charge voltage of the battery cell.

Alternatively, the receiving unit 1010 is further configured to receive a charging stop command transmitted by the BMS, the processing unit 1020 is configured to stop charging the battery, where the charging stop command is a command transmitted by the BMS when the voltage of the battery cell of the battery exceeds the full charge voltage of the battery cell.

Alternatively, a charging rate of the first charging current and/or the second charging current ranges from 2C to 10C.

Alternatively, a discharging rate of the first discharging current and/or the second discharging current ranges from 0.1C to 1C.

Alternatively, a ratio of the first accumulated discharging amount threshold to the first accumulated charging amount threshold is less than or equal to 10%, and/or, a ratio of the second accumulated discharging amount threshold to the second accumulated charging amount threshold is less than or equal to 10%.

Alternatively, at least one of the first charging current, the first discharging current and the second charging current is determined according to state parameters of the battery, where the state parameters of the battery include at least one of the following parameters: a battery temperature, a battery voltage, a battery current, a state of charge of the battery, and a state of health of the battery.

Alternatively, the receiving unit 1010 is further configured to regularly receive a first charging current transmitted by the BMS; and/or, the receiving unit 1010 is configured to regularly receive a first discharging current transmitted by the BMS; and/or, the receiving unit 1010 is configured to regularly receive a second charging current transmitted by the BMS.

Alternatively, the receiving unit 1010 is further configured to receive the first charge voltage transmitted by the BMS, where the first charge voltage and the first charging current are carried in a first BCL message; and/or, the receiving unit 1010 is further configured to receive the first discharging voltage transmitted by the BMS, where the first discharging voltage and the first discharging current are carried in a second BCL message; and/or, the receiving unit 1010 is further configured to receive the second charge voltage transmitted by the BMS, where the second charge voltage and the second charging current are carried in a third BCL message; and/or, the receiving unit 1010 is further configured to receive the second discharging voltage transmitted by the BMS, where the second discharging voltage and the second discharging current are carried in a fourth BCL message.

Embodiments of the method and the device for charging the battery based on information interaction between a charging and discharging device and a BMS are described above in connection with FIG. 2 to FIG. 10, and for the charging and discharging apparatus, the battery may be charged and controlled to discharge through different hardware architecture.

FIG. 11 illustrates a schematic structure block diagram of another charging and discharging device provided in an embodiment of the present application.

As shown in FIG. 11, the charging and discharging apparatus 1100 may include a control unit 1110 and a power conversion unit 1120.

In one embodiment, the control unit 1110 is configured to receive a first charging current transmitted by a BMS and controlling the power conversion unit 1120 to charge the battery according to the first charging current; the control unit 1110 is further configured to receive a first discharging current transmitted by the BMS and controlling the power conversion unit 1120 according to the first discharging current, thus making the battery discharge, where the first discharging current is a discharging current transmitted by the BMS when a first accumulated charging amount of the battery is greater than or equal to a first accumulated charging amount threshold and a voltage of a battery cell of the battery does not exceed a full charge voltage of the battery cell; the control unit 1110 is further configured to receive a second charging current transmitted by the BMS, and controlling the power conversion unit 1120 to charge the battery according to the second charging current, where the second charging current is a charging current transmitted by the BMS when a first accumulated discharging amount of the battery is greater than or equal to a first accumulated discharging amount threshold.

Specifically, the power conversion unit 1120 may include a high-voltage component for achieving high-power electric energy conversion, and the control unit 1110 may include a low-voltage circuit for achieving a control function of the high-voltage component in the power conversion unit 1120. In addition to this, the control unit 1110 may also establish a communication connection with the BMS, for example, by way of example but not limitation, the control unit 1110 may establish a communication connection with the BMS via a communication bus, or the control unit 1110 may also establish a communication connection with the BMS via a wireless network.

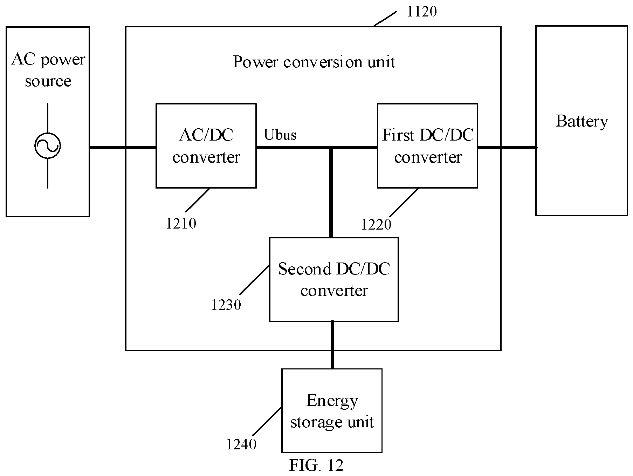

Alternatively, as an example, FIG. 12 illustrates a schematic structure block diagram of a power conversion unit 1120 provided in an embodiment of the present application. The power conversion unit 1120 shown in FIG. 12 can be applied to the charging and discharging apparatus in any one of the above embodiments.

As shown in FIG. 12, the power conversion unit 1120 can be connected to an alternating current (AC) power source and a battery. The power conversion unit 1120 includes an alternating current / direct current (AC/DC) converter 1210, a first direct current / direct current (DC/DC) converter 1220 and a second DC/DC converter 1230. One end of the second DC/DC converter 1230 is connected between the first DC/DC converter 1220 and the AC/DC converter 1210. The other end of the second DC/DC converter 1230 is connected to an energy storage unit 1240.

The energy storage unit 1240 may be configured as a part of the power conversion unit 1120 and may be also configured as a unit independent of the power conversion unit 1120 and is connected to the power conversion unit 1120 through an electric wire. The energy storage unit 1240 for example can be an energy storage battery.

Alternatively, the control unit 1110 is configured to receive a first charging request transmitted by a BMS of a battery and control a bidirectional AC/DC converter 1210 and a first DC/DC converter 1220 according to the first charging request to charge a battery through an AC power source, and/or control a second DC/DC converter 1230 and a first DC/DC converter 1220 to charge the battery through an energy storage unit 1240, where the first charging request includes a first charging current; receive a first discharging request transmitted by the BMS and discharge the power of the battery according to the first discharging request, where the first discharging request includes a first discharging current, and the first discharging request is a discharging current transmitted by the BMS when a first accumulative charging amount of the battery is greater than or equal to a first accumulative charging amount threshold and a voltage of a battery cell of the battery does not exceed a full charging voltage of the battery cell; and receiving a second charging request transmitted by the BMS and controlling the bidirectional AC/DC converter 1210 and the first DC/DC converter 1220 according to the second charging request to charge the battery through the AC power source, and/or controlling the second DC/DC converter 1230 and the first DC/DC converter 1220 to charge the battery through the energy storage unit 1240, where the second charging request includes a second charging current, and the second charging current is a charging current transmitted by the BMS when a first accumulative discharging amount of the battery is greater than or equal to a first accumulative discharging amount threshold.

It can be seen that in the process of charging the battery, the control unit enables the charging and discharging apparatus to charge and discharge the battery alternatively according to the first charging current and the first discharging current transmitted by the BMS by controlling the bidirectional AC/DC converter, the first DC/DC converter and the second DC/DC converter, thereby avoiding the problems of heating, lithium ion aggregation and the like of the battery caused by continuous charging, and then avoiding the safety problems of the battery, such as battery combustion or explosion, caused by heating, lithium ion aggregation and the like, and the safety performance of the battery is guaranteed.

Moreover, since the charging and discharging apparatus further includes a second DC/DC converter connected to an energy storage unit, the battery can discharge the power to an AC power source and/or the energy storage unit, thus improving output ability of the charging and discharging apparatus and performing charging and discharging on the battery alternatively more effectively, thereby avoiding the problems of heating, lithium ion aggregation and the like of the battery caused by continuous charging, and then avoiding the safety problems of the battery, such as battery combustion or explosion, caused by heating, lithium ion aggregation and the like, and the safety performance of the battery is guaranteed power.

Alternatively, the control unit 1110 is further configured to receive a second discharging request transmitted by the BMS and discharge the power of the battery according to the second discharging request, where the second discharging request includes a second discharging current, and the second discharging current is a discharging current transmitted by the BMS when a second accumulative charging amount of the battery is greater than or equal to a second accumulative charging amount threshold and a voltage of a battery cell of the battery does not exceed a full charging voltage of the battery cell.

In this way, the battery may be further discharged again after completing charge, discharge and recharge of the battery through information interaction between the BMS and the charging and discharging apparatus. In this way, a multi-cycle charging and discharging method can be further provided, the charging and discharging processes are sequentially and cyclically carried out to achieve gradual charge of the battery on the basis of ensuring the performance of the battery.

Alternatively, the control unit 1110 is further configured to receive a charging stop command transmitted by the BMS and stop charging the battery according to the charging stop command, where the charging stop command is a command transmitted by the BMS when a voltage of a battery cell of the battery exceeds a full charging voltage of the battery cell.

In one implementation, the control unit 1110 can control the power conversion unit 1120 according to the SOC of the energy storage unit to discharge the power of the battery to the AC power source and/or the energy storage unit 1240.

Alternatively, the control unit 1110 is specifically configured to: control the first DC/DC converter 1220 and the bidirectional AC/DC converter 1210 according to the first discharging request to discharge the power of the battery to an AC power source, and/or control a second DC/DC converter 1230 according to the first discharging request to discharge the power of the battery to the energy storage unit 1240.

For example, the control unit 1110 may determine that the power of the battery is preferentially discharged to one of the AC power source and the energy storage unit according to the SOC of the energy storage unit, and determine whether to turn on the other of the AC power source and the energy storage unit to discharge the power of the battery thereto according to a bus voltage U_{bus} when the battery is discharged.

In another implementation, the second DC/DC converter 1230 may be a bidirectional DC/DC. In addition that the AC power source can charge the battery, the control unit 1110 can also control the power conversion unit 1120 to charge the battery through the energy storage unit 1240.

When the second DC/DC converter 1230 is a bidirectional DC/DC converter, the charging and discharging apparatus can determine whether to use the energy storage unit to assist the AC power source to charge the battery together according to the SOC of the energy storage unit, thereby improving charging efficiency of the charging and discharging apparatus when the power stored in the energy storage unit is sufficient.

For example, the control unit 1110 may determine that the battery is preferentially charged through one of the AC power source and the energy storage unit according to the SOC of the energy storage unit, and determine whether to turn on the other of the AC power source and the energy storage unit to charge the battery according to a relationship between a bus voltage U_{bus} and a bus balance voltage U_{balance} when the battery is charged.

As shown in FIG. 12, the bus voltage U_{bus} is a voltage between positive and negative electrodes of a first end of the first DC/DC converter 1220, the first end of the first DC/DC converter 1220 is configured to connecting the AD/DC connector 1210 to one end of the second DC/DC converter 1230.

The bus balance voltage U_{balance} is a voltage designed for a charging system and can generally be equal to a rated bus voltage of the charging system. For a three-phase AC power source, for example, U_{balance} can be set in a range of 650V to 850V

Firstly, the following three situations are combined to describe possible implementations in the charging process of the battery,

Alternatively, the control unit 1110 can firstly configure to: set an input power of the first DC/DC converter 1220 according to the first discharging voltage and the first discharging current transmitted by the BMS, acquire the SOC of the energy storage unit 1240 and control the power conversion unit 1120 according to the SOC of the energy storage unit 1240 to discharge the power of the battery to the AC power source and/or the energy storage unit.

Alternatively, the first charging request further includes a first charging voltage, the input power of the first DC/DC converter 1220 can be set, for example, to be equal to a discharging demand power of the battery, and the discharging demand power of the battery can be, for example, a product of the first discharging current and the first discharging voltage.

The control unit 1100 is required to acquire the bus voltage U_{bus} of the charging and discharging apparatus 1100 in real time. For example, a detection circuit for detecting the bus voltage U_{bus} detects a bus voltage in real time and transmits the detected bus voltage U_{bus} to the control unit 1100. The bus voltage U_{bus} can be detected in real time according to a certain frequency.

### Situation 1

The SOC of the energy storage unit 1240 is less than a first threshold.

At this time, the second DC/DC converter 1230 is turned on to discharge the power of the battery to the energy storage unit 1240 through the first DC/DC converter 1220 and the second DC/DC converter 1230.

In one implementation, in a process of discharging of the battery to the energy storage unit 1240, when the bus voltage U_{bus} is greater than the bus balance voltage U_{balance} and a difference value between the bus voltage U_{bus} and the bus balance voltage U_{balance} exceeds a preset value U_{b1}, an input power of the second DC/DC converter 1230 is adjusted to a first input power of the second DC/DC converter 1230, where the first input power of the second DC/DC converter 1230 is less than or equal to a maximum input power P_{MAXDC/DC21} of the second DC/DC converter 1230.

When the second DC/DC converter 1230 works based on the first input power of the second DC/DC converter 1230, the difference value between the bus voltage U_{bus} and the bus balance voltage U_{balance} is less than or equal to the preset value U_{b1}

In another implementation, in a process of discharging of the battery to the energy storage unit 1240, when the bus voltage U_{bus} is greater than the bus balance voltage U_{balance} and a difference value between the bus voltage U_{bus} and the bus balance voltage U_{balance} exceeds a preset value U_{b1}, an input power of the second DC/DC converter 1230 is adjusted to a maximum input power P_{MAXDC/DC21} of the second DC/DC converter 1230, the AC/DC converter 1210 is turned on and an input power of the AD/DC converter 1210 is adjusted to a first input power of the AC/DC converter 1210 to simultaneously discharge the power of the battery to the AC power source through the AC/DC converter 1210 and the first DC/DC converter 1220.

When the second DC/DC converter 1230 works based on the maximum input power P_{MAXDC/DC21} of the second DC/DC converter 1230 and the AC/DC converter 1210 works at the first input power of the AC/DC converter 1210, the bus balance voltage U_{balance} and the difference value between the bus voltage U_{bus} and the bus balance voltage U_{balance} are less than or equal to the preset value U_{b1.}

Specifically, in situation 1, the SOC of the energy storage unit 1240 is less than the first threshold and the second DC/DC converter 1230 is turned on to preferentially discharge the power of the battery to the energy storage unit 1240. In a process of discharging of the battery to the energy storage unit 1240, when U_{bus}>U_{balance}+U_{b1}, an input power of the second DC/DC converter 1230 is adjusted until a difference value between U_{bus} and U_{balance} is less than U_{b1}. When an input power of the second DC/DC converter 1230 is adjusted to its maximum input power P_{MAXDC/DC21}, the bus voltage U_{bus} is still greater than U_{balance} and the difference value between U_{bus} and U_{balance} exceeds U_{b1}, then the AC/DC converter 1210 is turned on, so that the power of the battery is simultaneously discharged to the AC power source, and an input power of the AC/DC converter 1210 is adjusted to increase from 0 until the difference value between U_{bus} and U_{balance} is less than U_{b1.}

In this way, when the SOC of the energy storage unit is relatively low, the power of the battery is preferentially discharged to the energy storage unit to supplement the power stored in the energy storage unit and when a difference between the bus voltage and the bus balance voltage is relatively large, the power of the battery is then simultaneously discharged to the AC power source, in which case the AC power source and the energy storage unit receive the power discharged by the battery together. Thus a balance between the bus voltage and the bus balance voltage is kept, so that the charging and discharging apparatus can discharge the battery in a stable state.

### Situation 2

The SOC of the energy storage unit 1240 is greater than a first threshold and less than a second threshold.

The first threshold and the second threshold can be determined according to the property of the energy storage unit. The second threshold can be, for example, 10%, 20% or 30%, and the first threshold can be, for example, 70%, 80% or 90%.

At this time, the AC/DC converter 1210 is turned on to discharge the power of the battery to the AC power source through the first DC/DC converter 1220 and the AC/DC converter 1210.

In one implementation, in a process of discharging of the battery to the AC power source, when the bus voltage U_{bus} is greater than the bus balance voltage U_{balance} and a difference value between the bus voltage U_{bus} and the bus balance voltage U_{balance} exceeds a preset value U_{b1}, an input power of the AC/DC converter 1210 is adjusted to a second input power of the AC/DC converter 1210, where the second input power of the AC/DC converter 1210 is less than or equal to a maximum input power P_{MAXDC/DC1} of the AC/DC converter 1210.

When the AC/DC converter 1210 works based on the second input power of the AC/DC converter 1210, the difference value between the bus voltage and the bus balance voltage is less than or equal to the preset value U_{b1}.

In another implementation, in a process of discharging of the battery to the AC power source, when the bus voltage U_{bus} is greater than the bus balance voltage U_{balance} and a difference value between the bus voltage U_{bus} and the bus balance voltage U_{balance} exceeds a preset value U_{b1}, an input power of the AC/DC converter 1210 is adjusted to a maximum input power P_{MAXAC/DC1} of the AC/DC converter 1210, the second DC/DC converter 1230 is turned on and an input power of the second DC/DC converter 1230 is adjusted to a second input power of the second DC/DC converter 1230, so that the power of the battery is simultaneously discharged to the energy storage unit 1240 through the first DC/DC converter 1220 and the second DC/DC converter 1230.

When the AC/DC converter 1210 works based on the maximum input power of the AC/DC converter 1210 and the second DC/DC converter 1230 works based on the second input power of the second DC/DC converter 1230, the difference value between the bus voltage U_{bus} and the bus balance voltage U_{balance} is less than or equal to the preset value U_{b1.}

Specifically, in situation 2, the SOC of the energy storage unit 1240 is greater than the first threshold and less than the second threshold, the AC/DC converter 1210 is turned on to discharge the power of the battery to the AC power source preferentially. In a process of discharging of the battery to the AC power source, when U_{bus}> U_{balance}+U_{b1}, an input power of the AC/DC converter 1210 is adjusted until the difference value between U_{bus} and U_{balance} is less than U_{b1}. When an input power of the AC/DC converter 1210 is adjusted to its maximum input power P_{MAXAC/DC1}, the bus voltage U_{bus} is still greater than U_{balance} and the difference value between U_{bus} and U_{balance} exceeds U_{b1}, the second DC/DC converter 1230 is turned on so that the power of the battery is simultaneously discharged to the energy storage unit 1240, and an input power of the second DC/DC converter 1230 is adjusted to increase from 0 till the difference value between U_{bus} and U_{balance} is less than U_{b1}.

In this way, when the SOC of the energy storage unit is in a proper range, the power of the battery is preferentially discharged to the AC power source to avoid the power stored in the energy storage unit exceeding its capacity, and when the difference between the bus voltage and the bus balance voltage is relatively large, the power of the battery is then simultaneously discharged to the energy storage unit, in which case the energy storage unit and the AC power source receive the power discharged by the battery together. Thus the balance between the bus voltage and the bus balance voltage is kept, so that the charging and discharging apparatus can discharge the battery in a stable state.

### Situation 3

The SOC of the energy storage unit 1240 is greater than a second threshold.

At this time, the AC/DC converter 1210 is turned on to discharge the power of the battery to the AC power source through the first DC/DC converter 1220 and the AC/DC converter 1210, and the second DC/DC converter 1230 is controlled to turn off to disable discharging of the power of the battery to the energy storage unit 1240 through the first DC/DC converter 1220 and the second DC/DC converter 1230.

In one implementation, in a process of discharging the power of the battery to the AC power source, when the bus voltage U_{bus} is greater than the bus balance voltage U_{balance} and a difference value between the bus voltage U_{bus} and the bus balance voltage U_{balance} exceeds a preset value U_{b1}, an input power of the AC/DC converter 1210 is adjusted to a third input power of the AC/DC converter 1210, where the third input power of the AC/DC converter 1210 is less than or equal to a maximum input power of the AC/DC converter 1210.

When the AC/DC converter 1210 works based on the third input power of the AC/DC converter 1210, the difference value between the bus voltage U_{bus} and the bus balance voltage U_{balance} is less than the preset value U_{b1.}

In another implementation, in a process of discharging the power of the battery to the AC power source, when the bus voltage U_{bus} is greater than the bus balance voltage U_{balance} and a difference value between the bus voltage U_{bus} and the bus balance voltage U_{balance} exceeds a preset value U_{b1}, an input power of the AC/DC converter 1210 is adjusted to a maximum input power of the AC/DC converter 1210, and an input power of the first DC/DC converter 1220 is set to be a maximum input power of the AC/DC converter 1210.

Specifically, in situation 3, the SOC of the energy storage unit 1240 is greater than the second threshold, resulting in failure of the energy storage unit 1240 to bear extra power. Thus, the AC/DC converter 1210 is turned on to only discharge the power of the battery to the AC power source, and the second DC/DC converter 1230 is controlled to be in an off state to disable discharging of the power of the battery to the energy storage unit 1240. In a process of discharging of the battery to the AC power source, when U_{bus} >U_{balance}+U_{b1}, an input power of the AC/DC converter 1210 is adjusted until the difference value between U_{bus} and U_{balance} is less than U_{b1}.

In this way, when the SOC of the energy storage unit is relatively high, the power of the battery is only discharged to the AC power source to prevent the power stored in the energy storage unit exceeding its capacity.

Possible implementations in the charging process of the battery are described below by combining the following three situations.

Alternatively, the control unit 1110 can firstly configure to: set an output power of the first DC/DC converter 1220 according to the first charging voltage and the first charging current transmitted by the BMS, acquire the SOC of the energy storage unit 1240 and control the power conversion unit 1120 according to the SOC of the energy storage unit 1240 to charge the battery through the AC power source and/or the energy storage unit.

Alternatively, the first discharging request further includes a first discharging voltage, an output power of the first DC/DC converter 1220 can be, for example, set to be equal to a charging demand power of the battery, and the charging demand power of the battery can be, for example, a product of the first charging current and the first charging voltage.

The control unit 1100 needs to acquire the bus voltage U_{bus} of the charging and discharging apparatus 1100 in real time. For example, a detection circuit for detecting the bus voltage U_{bus} detects a bus voltage in real time and transmits the detected bus voltage U_{bus} to the control unit 1100. The bus voltage U_{bus} can be detected in real time according to a certain frequency.

### Situation 1

The SOC of the energy storage unit 1240 is greater than a third threshold.

At this time, the second DC/DC converter 1230 is turned on to charge the battery by the energy storage unit 1240 through the first DC/DC converter 1220 and the second DC/DC converter 1230.

In one implementation, in a process of charging the battery by the energy storage unit 1240, when the bus voltage U_{bus} is less than the bus balance voltage U_{balance} and a difference value between the bus voltage U_{bus} and the bus balance voltage U_{balance} exceeds a preset value U_{b2}, an output power of the second DC/DC converter 1230 is adjusted to a first output power of the second DC/DC converter 1230, where the first output power of the second DC/DC converter 1230 is less than or equal to a maximum output power P_{MAXDC/DC22} of the second DC/DC converter 1230.

When the second DC/DC converter 1230 works based on the first output power of the second DC/DC converter 1230, the difference value between the bus voltage U_{bus} and the bus balance voltage U_{balance} is less than the preset value U_{b2}.

In another implementation, in a process of charging the battery by the energy storage unit 1240, when the bus voltage U_{bus} is less than the bus balance voltage U_{balance} and a difference value between the bus voltage U_{bus} and the bus balance voltage U_{balance} exceeds a preset value U_{b2}, an output power of the second DC/DC converter 1230 is adjusted to a maximum output power P_{MAXDC/DC22} of the second DC/DC converter 1230, the AC/DC converter 1210 is turned on and an output power of the AD/DC converter 1210 is adjusted to a first output power of the AC/DC converter 1210 to simultaneously charge the battery by the AC power source through the AC/DC converter 1210 and the first DC/DC converter 1220.

When the second DC/DC converter 1230 works based on the maximum output power P_{MAXDC/DC22} of the second DC/DC converter 1230 and the AC/DC converter 1210 works at the first output power of the AC/DC converter 1210, the difference value between the bus voltage U_{bus} and the bus balance voltage U_{balance} is less than the preset value U_{b2}.

Specifically, in situation 1, the SOC of the energy storage unit 1240 is greater than the third threshold and the second DC/DC converter 1230 is turned on to charge the battery by the energy storage unit 1240 preferentially. In a process of charging the battery by the energy storage unit 1240, when U_{bus}<U_{balance}-U_{b2}, an output power of the second DC/DC converter 1230 is adjusted until the difference value between U_{bus} and U_{balance} is less than U_{b2}. When an output power of the second DC/DC converter 1230 is adjusted to its maximum output power P_{MAXDC/DC22}, the bus voltage U_{bus} is still less than U_{balance} and the difference value between U_{bus} and U_{balance} exceeds U_{b}, then the AC/DC converter 1210 is turned on, so that the battery is simultaneously charged through the AC power source, and an output power of the AC/DC converter 1210 is adjusted to increase from 0 until the difference value between U_{bus} and U_{balance} is less than U_{b2}.

In this way, when the SOC of the energy storage unit is relatively high, the energy storage unit is preferential to charge the battery to discharge the power stored in the energy storage unit and make preparations for subsequently receiving the power discharged by the battery, and when the difference between the bus voltage and the bus balance voltage is relatively large, the AC power source is turned on, in which case the battery is charged by the AC power source and the energy storage unit together. Thus, the balance between the bus voltage and the bus balance voltage is kept to facilitate the charging and discharging apparatus to charge the battery in a stable state.

### Situation 2

The SOC of the energy storage unit 1240 is greater than a fourth threshold and less than a third threshold.

The third threshold and the fourth threshold can be determined according to the property of the energy storage unit. The fourth threshold can be, for example, 10%, 20% or 30%, and the third threshold can be, for example, 70%, 80% or 90%.

At this time, the AC/DC converter 1210 is turned on to charge the battery by the AC power source through the first DC/DC converter 1220 and the AC/DC converter 1210.

In one implementation, in a process of charging the battery by the AC power source, when the bus voltage U_{bus} is less than the bus balance voltage U_{balance} and a difference value between the bus voltage U_{bus} and the bus balance voltage U_{balance} exceeds a preset value U_{b2}, an output power of the AC/DC converter 1210 is adjusted to a second output power of the AC/DC converter 1210, where the second output power of the AC/DC converter 1210 is less than or equal to a maximum output power P_{MAXAC/DC2} of the AC/DC converter 1210.

When the AC/DC converter 1210 works based on the second output power of the AC/DC converter 1210, the difference value between the bus voltage U_{bus} and the bus balance voltage U_{balance} is less than or equal to the preset value U_{b2}.

In another implementation, in a process of charging the battery by the AC power source, when the bus voltage U_{bus} is less than the bus balance voltage U_{balance} and a difference value between the bus voltage U_{bus} and the bus balance voltage U_{balance} exceeds a preset value U_{b2}, an output power of the AC/DC converter 1210 is adjusted to a maximum output power P_{MAXAC/DC2} of the AC/DC converter 1210, the second DC/DC converter 1230 is turned on and an output power of the second DD/DC converter 1230 is adjusted to a second output power of the second DC/DC converter 1230 to simultaneously charge the battery by the energy storage unit 1240 through the first DC/DC converter 1220 and the second DC/DC converter 1230.

When the AC/DC converter 1210 works based on the maximum output power P_{MAXAC/DC2} of the AC/DC converter 1210 and the second DC/DC converter 1230 works based on the second output power of the second DC/DC converter 1230, the difference value between the bus voltage U_{bus} and the bus balance voltage U_{balance} is less than or equal to the preset value U_{b2}.

Specifically, in situation 2, the SOC of the energy storage unit 1240 is greater than the fourth threshold and less than the third threshold, and the AC/DC converter 1210 is turned on to charge the battery through the AC power source preferentially. In a process of charging the battery by the AC power source, when U_{bus}<U_{balance}-U_{b2}, an output power of the AC/DC converter 1210 is adjusted until the difference value between U_{bus} and U_{balance} is less than U_{b2}. When the output power of the AC/DC converter 1210 is adjusted to its maximum output power P_{MAXAC/DC2}, the bus voltage U_{bus} is still less than U_{balance} and the difference value between U_{bus} and U_{balance} exceeds U_{b}, then the second DC/DC converter 1230 is turned on, so that the battery is simultaneously charged by the energy storage unit 1240, and an output power of the second DC/DC converter 1230 is adjusted to increase from 0 until the difference value between U_{bus} and U_{balance} is less than U_{b2}.

In this way, when the SOC of the energy storage unit is in a proper range, the AC power source is used to charge the battery preferentially, and when the difference between the bus voltage and the bus balance voltage is relatively large, the energy storage unit is turned on, in which case the battery is charged by the AC power source and the energy storage unit together. Thus, the balance between the bus voltage and the bus balance voltage is kept to facilitate the charging and discharging apparatus to charge the battery in a stable state.

### Situation 3

The SOC of the energy storage unit 1240 is less than a fourth threshold.

At this time, the AC/DC converter 1210 is turned on to charge the battery by the AC power source through the first DC/DC converter 1220 and the DC/DC converter 1210.

In one implementation, in a process of charging the battery by the AC power source, when the bus voltage U_{bus} is less than the bus balance voltage U_{balance} and a difference value between the bus voltage U_{bus} and the bus balance voltage U_{balance} exceeds a preset value Ub2, an output power of the AC/DC converter 1210 is adjusted to a third output power of the AC/DC converter 1210, where the third output power of the AC/DC converter 1210 is less than a maximum output power P_{MAXAC/DC2} of the AC/DC converter 1210.

When the AC/DC converter 1210 works based on the third output power of the AC/DC converter 1210, the difference value between the bus voltage U_{bus} and the bus balance voltage U_{balance} is less than or equal to the preset value U_{b2}.

In one implementation, in a process of charging the battery by the AC power source, when the bus voltage U_{bus} is less than the bus balance voltage U_{balance} and a difference value between the bus voltage U_{bus} and the bus balance voltage U_{balance} exceeds a preset value Ub2, an output power of the AC/DC converter 1210 is adjusted to a maximum output power of the AC/DC converter 1210 and an output power of the first DC/DC converter 1220 is set to be a maximum output power P_{MAXAC/DC2} of the AC/DC converter 1210.

Specifically, in situation 3, the SOC of the energy storage unit 1240 is less than the fourth threshold, and there is no extra power in the energy storage unit 1240 to charge the battery. Thus, the AC/DC converter 1210 is turned on to charge the battery only by the AC power source, and the second DC/DC converter 1230 is controlled to be in an off state to disable charging of the battery using the energy storage unit 1240. In a process of charging the battery by the AC power source, when U_{bus}<U_{balance}-U_{b2}, an output power of the AC/DC converter 1210 is adjusted until the difference value between U_{bus} and U_{balance} is less than U_{b2}.

In this way, when the SOC of the energy storage unit is relatively small, only the AC power source is configured to charge the battery to save the power reserved in the energy storage unit.

It should be understood that in embodiments of the present application, the input power and the output power of the bidirectional AC/DC converter 1210, the first DC/DC converter 1220 and the second DC/DC converter 1230 during work shall not exceed their respective maximum input power and maximum output power.

Embodiments of the present application do not make any limitation to the manners of adjusting the output power of the second DC/DC converter 1230 and the AC/DC converter 1210. For example, the output power or the input power of the AC/DC converter 1610 or the second DC/DC converter 1230 can be increased or decreased gradually according to a preset step length.

Alternatively, the AC power source includes but is not limited to a power grid, which may be configured to provide a three-phase alternating current, the power grid may provide enough electric amount to the battery for charging as well as receive a higher electric amount released by the battery.

Alternatively, in other embodiments, the AC power source may also be a single-phase AC power source. The embodiments of the present application have no limitation on the specific type of the AC power source.

It should be noted that in the embodiments of the present application, the power conversion unit 1120 may be connected to a DC power source in addition to an AC power source as shown in FIG. 12, where only a DC/DC converter may be included in the power conversion unit 1120 to enable current transfer between the battery and the DC power source.

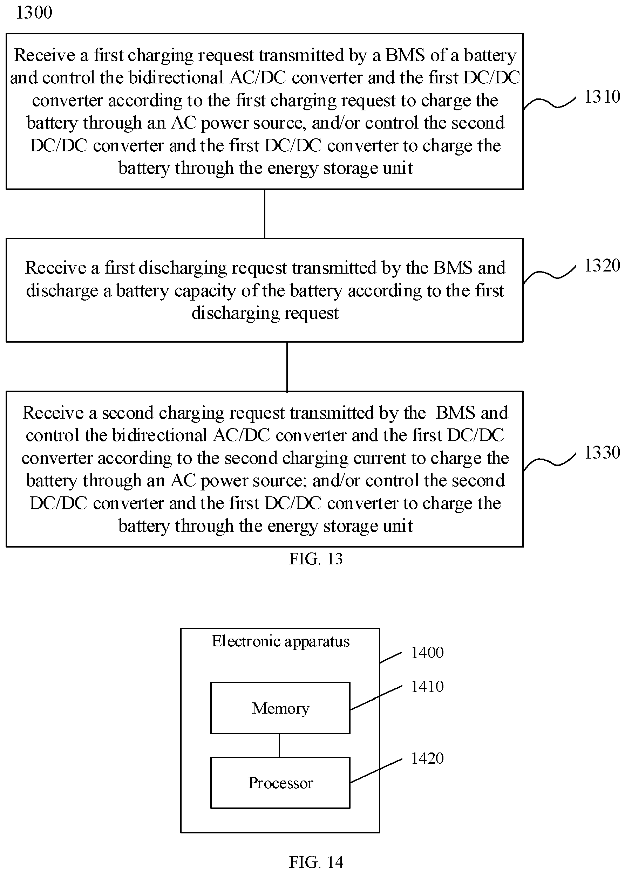

Embodiments of the present application further provide a method for charging a battery. As shown in FIG. 13, the method 1300 can be performed by by a charging and discharging apparatus having the power conversion unit 1120 shown in FIG. 12, the charging and discharging apparatus including a bidirectional AC/DC converter, a first DC/DC converter, a second DC/DC converter and a control unit, where one end of the second DC/DC converter is connected between the first DC/DC converter and the bidirectional AC/DC converter, the other end of the second DC/DC converter is connected to an energy storage unit, and the first DC/DC converter is a bidirectional DC/DC converter; the method including:
step 1310: receiving a first charging request transmitted by a BMS of a battery and controlling the bidirectional AC/DC converter and the first DC/DC converter according to the first charging request to charge the battery through an AC power source, and/or controlling the second DC/DC converter and the first DC/DC converter to charge the battery through the energy storage unit, where the first charging request includes a first charging current;
step 1320: receiving a first discharging request transmitted by the BMS and discharging a power of the battery according to the first discharging request, where the first discharging request includes a first discharging current, and the first discharging request is a discharging current transmitted by the BMS when a first accumulative charging amount of the battery is greater than or equal to a first accumulative charging amount threshold and a voltage of a battery cell of the battery does not exceed a full charging voltage of the battery cell; and
step 1330: receiving a second charging request transmitted by the BMS and controlling the bidirectional AC/DC converter and the first DC/DC converter according to the second charging request to charge the battery through the AC power source, and/or controlling the second DC/DC converter and the first DC/DC converter to charge the battery through the energy storage unit, where the second charging request includes a second charging current and the second charging current is a charging current transmitted by the BMS when a first accumulative discharging amount of the battery is greater than or equal to a first accumulative discharging amount threshold.

Alternatively, the method further includes: receiving a second discharging request transmitted by the BMS and discharging the power of the battery according to the second discharging request, where the second discharging request includes a second discharging current, and the second discharging current is a discharging current transmitted by the BMS when a second accumulative charging amount of the battery is greater than or equal to a second accumulative charging amount threshold and a voltage of a battery cell of the battery does not exceed a full charging voltage of the battery cell.

Alternatively, the method further includes: receiving a charging stop command transmitted by the BMS and stopping charging the battery according to the charging stop command, where the charging stop command is a command transmitted by the BMS when a voltage of a battery cell of the battery exceeds a full charging voltage of the battery cell.

Alternatively, the discharging a power of the battery according to the first discharging current includes: controlling the first DC/DC converter and the bidirectional AC/DC converter according to the first discharging request to discharge the power of the battery to the AC power source; and controlling the second DC/DC converter to according to the first discharging request to simultaneously discharge the power of the battery to the energy storage unit.

Alternatively, the first discharging request further includes a first discharging voltage and the discharging a power of the battery according to the first discharging current includes: setting an input power of the first DC/DC converter according to the first discharging voltage and the first discharging current; acquiring a SOC of the energy storage unit; acquiring a bus voltage of the charging and discharging apparatus in real time; when the SOC of the energy storage unit is less than a first threshold, turning on the second DC/DC converter to discharge the power of the battery to the energy storage unit through the first DC/DC converter and the second DC/DC converter; when the bus voltage is greater than a bus balance voltage and a difference value between the bus voltage and the bus balance voltage exceeds a preset value in a process of discharging of the battery to the energy storage unit, adjusting an input power of the second DC/DC converter to a first input power of the second DC/DC converter, where the first input power of the second DC/DC converter is less than or equal to a maximum input power of the second DC/DC converter; where when the second DC/DC converter works based on the first input power of the second DC/DC converter, the difference value between the bus voltage and the bus balance voltage is less than or equal to the preset value.

Alternatively, the method further includes: when the bus voltage is greater than a bus balance voltage and a difference value between the bus voltage and the bus balance voltage exceeds a preset value in a process of discharging of the battery to the energy storage unit, adjusting an input power of the second DC/DC converter to a maximum input power of the second DC/DC converter, turning on the AC/DC converter and adjusting an input power of the AC/DC converter to a first input power of the AC/DC converter to simultaneously discharge the power of the battery to the AC power source through the AC/DC converter and the first DC/DC converter; where when the second DC/DC converter works based on the maximum input power of the second DC/DC converter and the AC/DC converter works at the first input power of the AC/DC converter, the difference value between the bus voltage and the bus balance voltage is less than or equal to the preset value.

Alternatively, the method further includes: when the SOC of the energy storage unit is greater than a second first threshold and less than a second threshold, turning on the AC/DC converter to discharge the power of the battery to the AC power source through the first DC/DC converter and the AC/DC converter; when the bus voltage is greater than a bus balance voltage and a difference value between the bus voltage and the bus balance voltage exceeds a preset value in a process of discharging of the battery to the AC power source, adjusting an input power of the AC/DC converter to a second input power of the AC/DC converter, where the second input power of the AC/DC converter is less than or equal to a maximum input power of the AC/DC converter; where when the AC/DC converter works based on the second input power of the AC/DC converter, the difference value between the bus voltage and the bus balance voltage is less than or equal to the preset value.

Alternatively, the method further includes: when the bus voltage is greater than a bus balance voltage and a difference value between the bus voltage and the bus balance voltage exceeds a preset value in a process of discharging of the battery to the AC power source, adjusting an input power of the AC/DC converter to a maximum input power of the AC/DC converter, turning on the second DC/DC converter and adjusting an input power of the second DC/DC converter to a second input power of the second DC/DC converter to simultaneously discharge the power of the battery to the energy storage unit through the first DC/DC converter and the second DC/DC converter; where when the AC/DC converter works based on the maximum input power of the AC/DC converter and the second DC/DC converter works based on the second input power of the second DC/DC converter, the difference value between the bus voltage and the bus balance voltage is less than the preset value.

Alternatively, the method further includes: when the SOC of the energy storage unit is greater than the second threshold, turning on the AC/DC converter to discharge the power of the battery to the AC power source through the first DC/DC converter and the AC/DC converter and controlling to turn off the second DC/DC converter to disable discharging of the power of the battery to the energy storage unit through the first DC/DC converter and the second DC/DC converter; and when the bus voltage is greater than a bus balance voltage and a difference value between the bus voltage and the bus balance voltage exceeds a preset value in a process of discharging the power of the battery to the AC power source, adjusting an input power of the AC/DC converter to a third input power of the AC/DC converter, where the third input power of the AC/DC converter is less than or equal to a maximum input power of the AC/DC converter; where when the AC/DC converter works based on the third input power of the AC/DC converter, the difference value between the bus voltage and the bus balance voltage is less than or equal to the preset value.

Alternatively, the method further includes: when the bus voltage is greater than a bus balance voltage and a difference value between the bus voltage and the bus balance voltage exceeds a preset value in a process of discharging the power of the battery to the AC power source, adjusting an input power of the AC/DC converter to a maximum input power of the AC/DC converter and setting an input power of the first DC/DC converter as a maximum input power of the AC/DC converter.

Alternatively, the second DC/DC converter is a bidirectional DC/DC converter and the method further includes: setting an output power of the first DC/DC converter according to the first charging voltage and the first charging current; acquiring the SOC of the energy storage unit; when the SOC of the energy storage unit is greater than a third threshold, turning on the second DC/DC converter to charge the battery by the energy storage unit through the first DC/DC converter and the second DC/DC converter; acquiring a bus voltage of the charging and discharging apparatus in real time; when the bus voltage is less than a bus balance voltage and a difference value between the bus voltage and the bus balance voltage exceeds a preset value in a process of charging the battery by the energy storage unit, adjusting an output power of the second DC/DC converter to a first output power of the second DC/DC converter, where the first output power of the second DC/DC converter is less than or equal to a maximum output power of the second DC/DC converter; where when the second DC/DC converter works based on the first output power of the second DC/DC converter, the difference value between the bus voltage and the bus balance voltage is less than or equal to the preset voltage value.

Alternatively, the method further includes: when the bus voltage is less than a bus balance voltage and a difference value between the bus voltage and the bus balance voltage exceeds a preset value in a process of charging the battery by the energy storage unit, adjusting an output power of the second DC/DC converter to a maximum output power of the second DC/DC converter, turning on the AC/DC converter and adjusting an output power of the AC/DC converter to a first output power of the AC/DC converter to simultaneously charge the battery by the AC power source through the AC/DC converter and the first DC/DC converter; where when the second DC/DC converter works based on the maximum output power of the second DC/DC converter and the AC/DC converter works at the first output power of the AC/DC converter, the difference value between the bus voltage and the bus balance voltage is less than or equal to the preset value.

Alternatively, the method further includes: when the SOC of the energy storage unit is greater than a fourth threshold and less than the third threshold, turning on the AC/DC converter to charge the battery by the AC power source through the first DC/DC converter and the AC/DC converter; when the bus voltage is less than a bus balance voltage and a difference value between the bus voltage and the bus balance voltage exceeds a preset value in a process of charging the battery by the AC power source, adjusting an output power of the AC/DC converter to a second output power of the AC/DC converter, where the second output power of the AC/DC converter is less than or equal to a maximum output power of the AC/DC converter; where when the AC/DC converter works based on the second output power of the AC/DC converter, the difference value between the bus voltage and the bus balance voltage is less than or equal to the preset value.

Alternatively, the method further includes: when the bus voltage is less than a bus balance voltage and a difference value between the bus voltage and the bus balance voltage exceeds a preset value in a process of charging the battery by the AC power source, adjusting an output power of the AC/DC converter to a maximum output power of the AC/DC converter, turning on the second DC/DC converter and adjusting an output power of the second DC/DC converter to a second output power of the second DC/DC converter to simultaneously charge the battery by the energy storage unit through the first DC/DC converter and the second DC/DC converter; where when the AC/DC converter works based on the maximum output power of the AC/DC converter and the second DC/DC converter works based on the second output power of the second DC/DC converter, the difference value between the bus voltage and the bus balance voltage is less than the preset value.

Alternatively, the method further includes: when the SOC of the energy storage unit is less than a fourth threshold, turning on the AC/DC converter to charge the battery by the AC power source through the first DC/DC converter and the AC/DC converter; when the bus voltage is less than a bus balance voltage and a difference value between the bus voltage and the bus balance voltage exceeds a preset value in a process of charging the battery by the AC power source, adjusting an input power of the AC/DC converter to a third output power of the AC/DC converter, where the third output power of the AC/DC converter is less than a maximum output power of the AC/DC converter; where when the AC/DC converter works based on the third output power of the AC/DC converter, the difference value between the bus voltage and the bus balance voltage is less than or equal to the preset value.

Alternatively, the method further includes: when the bus voltage is less than a bus balance voltage and a difference value between the bus voltage and the bus balance voltage exceeds a preset value in a process of charging the battery by the AC power source, adjusting an input power of the AC/DC converter to a maximum input power of the AC/DC converter and setting an output power of the first DC/DC converter as a maximum input power of the AC/DC converter.

FIG. 14 illustrates a schematic structure block diagram of an electronic device 1400 provided in one embodiment of the present application. As shown in FIG. 14, the electronic device 1400 includes a memory 1410 and a processor 1420, where the memory 1410 is configured to store a computer program, and the processor 1420 is configured to read the computer program and execute the methods in above various embodiments of the present application based on the computer program.

Alternatively, the electronic device 1400 may be used for any one or more of the BMS and the charging and discharging apparatus. In the embodiments of the present application, in addition to the fact that the processor in the charging and discharging apparatus reads the corresponding computer program and executes the charging method corresponding to the charging and discharging apparatus in the various embodiments based on the computer program, the processor in the BMS may also read the corresponding computer program and execute the charging method corresponding to the BMS in the various embodiments based on the computer program.

In addition, the embodiments of the present application further provide a readable storage medium for storing a computer program, where the computer program is configured to execute the method in the various embodiments of the present application. Alternatively, the computer program may be a computer program in the charging and discharging apparatus and/or BMS.

It should be understood that the specific examples herein are intended merely to aid those skilled in the art in better understanding the embodiments of the present application and are not intended to limit the scope of the embodiments of the present application.

It further should be understood that in the various embodiments of the present application, the serial number of each process does not mean the sequence of execution, and the execution sequence of each process should be determined by the function and the internal logic, and should not limit the implementation process of the embodiments of the present application.

It is also to be understood that the various embodiments described in this specification may be implemented separately or in combination, to which the embodiments of the present application have no limitation.

While the present application has been described with reference to preferred embodiments, various modifications may be made thereto and equivalents may be substituted for components thereof without departing from the scope of the present application. In particular, the various technical features mentioned in various embodiments may be combined in any way as long as no structural conflict exists. The present application is not limited to the particular embodiments disclosed herein, but includes all technical solutions falling within the scope of the claims.

## Claims

1. A charging and discharging apparatus, comprising a bidirectional alternating current/direct current (AC/DC) converter, a first direct current/direct current (DC/DC) converter, a second DC/DC converter and a control unit, wherein one end of the second DC/DC converter is connected between the first DC/DC converter and the bidirectional AC/DC converter, the other end of the second DC/DC converter is connected to an energy storage unit, and the first DC/DC converter is a bidirectional DC/DC converter;
wherein the control unit is configured to:
receive a first charging request transmitted by a battery management system (BMS) of a battery and control the bidirectional AC/DC converter and the first DC/DC converter according to the first charging request to charge the battery through an AC power source, and/or control the second DC/DC converter and the first DC/DC converter to charge the battery through the energy storage unit, wherein the first charging request comprises a first charging current;
receive a first discharging request transmitted by the BMS and discharging a power of the battery according to the first discharging request, wherein the first discharging request comprises a first discharging current, and the first discharging request is a discharging current transmitted by the BMS when a first accumulative charging amount of the battery is greater than or equal to a first accumulative charging amount threshold and a voltage of a battery cell of the battery does not exceed a full charging voltage of the battery cell; and
receive a second charging request transmitted by the BMS and control the bidirectional AC/DC converter and the first DC/DC converter according to the second charging request to charge the battery through the AC power source, and/or control the second DC/DC converter and the first DC/DC converter to charge the battery through the energy storage unit, wherein the second charging request comprises a second charging current and the second charging request is a charging current transmitted by the BMS when a first accumulative discharging amount of the battery is greater than or equal to a first accumulative discharging amount threshold.

2. The charging and discharging apparatus according to claim 1, wherein the control unit is further configured to:
receive a second discharging request transmitted by the BMS and discharge power of the battery according to the second discharging request, wherein the second discharging request comprises a second discharging current, and the second discharging current is a discharging current transmitted by the BMS when a second accumulative charging amount of the battery is greater than or equal to a second accumulative charging amount threshold and a voltage of a battery cell of the battery does not exceed a full charging voltage of the battery cell.

3. The charging and discharging apparatus according to claim 1 or 2, wherein the control unit is further configured to:
receive a charging stop command transmitted by the BMS and stop charging the battery according to the charging stop command, wherein the charging stop command is a command transmitted by the BMS when a voltage of a battery cell of the battery exceeds a full charging voltage of the battery cell.

4. The charging and discharging apparatus according to any one of claims 1 to 3, wherein the control unit is specifically configured to:
control the first DC/DC converter and the bidirectional AC/DC converter according to the first discharging request to discharge the power of the battery to the AC power source; and/or
control the second DC/DC converter according to the first discharging request to discharge the power of the battery to the energy storage unit.

5. The charging and discharging apparatus according to claim 4, wherein the first discharging request further comprises a first discharging voltage and the control unit is specifically configured to:
set an input power of the first DC/DC converter according to the first discharging voltage and the first discharging current;
acquire a state of charge (SOC) of the energy storage unit;
acquire a bus voltage of the charging and discharging apparatus on a real time;
when the SOC of the energy storage unit is less than a first threshold, turn on the second DC/DC converter to discharge the power of the battery to the energy storage unit through the first DC/DC converter and the second DC/DC converter;
when the bus voltage is greater than a bus balance voltage and a difference value between the bus voltage and the bus balance voltage exceeds a preset value in a process of discharging of the battery to the energy storage unit, adjust an input power of the second DC/DC converter to a first input power of the second DC/DC converter, wherein the first input power of the second DC/DC converter is less than or equal to a maximum input power of the second DC/DC converter;
wherein when the second DC/DC converter works based on the first input power of the second DC/DC converter, the difference value between the bus voltage and the bus balance voltage is less than or equal to the preset value.

6. The charging and discharging apparatus according to claim 5, wherein the control unit is further configured to:
when the bus voltage is greater than the bus balance voltage and a difference value between the bus voltage and the bus balance voltage exceeds the preset value in a process of discharging of the battery to the energy storage unit, adjust an input power of the second DC/DC converter to a maximum input power of the second DC/DC converter, turn on the AC/DC converter and adjust an input power of the AC/DC converter to a first input power of the AC/DC converter to simultaneously discharge the power of the battery to the AC power source through the AC/DC converter and the first DC/DC converter;
wherein when the second DC/DC converter works based on the maximum input power of the second DC/DC converter and the AC/DC converter works at the first input power of the AC/DC converter, the difference value between the bus voltage and the bus balance voltage is less than or equal to the preset value.

7. The charging and discharging apparatus according to claim 5 or 6, wherein the control unit is specifically configured to:
when the SOC of the energy storage unit is greater than the first threshold and less than a second threshold, turn on the AC/DC converter to discharge the power of the battery to the AC power source through the first DC/DC converter and the AC/DC converter;
when the bus voltage is greater than a bus balance voltage and a difference value between the bus voltage and the bus balance voltage exceeds the preset value in a process of discharging of the battery to the AC power source, adjust an input power of the AC/DC converter to a second input power of the AC/DC converter, wherein the second input power of the AC/DC converter is less than or equal to a maximum input power of the AC/DC converter;
wherein when the AC/DC converter works based on the second input power of the AC/DC converter, the difference value between the bus voltage and the bus balance voltage is less than or equal to the preset value.

8. The charging and discharging apparatus according to claim 7, wherein the control unit is specifically configured to:
when the bus voltage is greater than a bus balance voltage and a difference value between the bus voltage and the bus balance voltage exceeds the preset value in a process of discharging of the battery to the AC power source, adjust an input power of the AC/DC converter to a maximum input power of the AC/DC converter, turning on the second DC/DC converter and adjust an input power of the second DC/DC converter to a second input power of the second DC/DC converter to simultaneously discharge the power of the battery to the energy storage unit through the first DC/DC converter and the second DC/DC converter;
wherein when the AC/DC converter works based on the maximum input power of the AC/DC converter and the second DC/DC converter works based on the second input power of the second DC/DC converter, the difference value between the bus voltage and the bus balance voltage is less than the preset value.

9. The charging and discharging apparatus according to any one of claims 5 to 8, wherein the control unit is specifically configured to:
when the SOC of the energy storage unit is greater than the second threshold, turn on the AC/DC converter to discharge the power of the battery to the AC power source through the first DC/DC converter and the AC/DC converter and control to turn off the second DC/DC converter to disable discharging of the power of the battery to the energy storage unit through the first DC/DC converter and the second DC/DC converter; and
when the bus voltage is greater than a bus balance voltage and a difference value between the bus voltage and the bus balance voltage exceeds the preset value in a process of discharging the power of the battery to the AC power source, adjust an input power of the AC/DC converter to a third input power of the AC/DC converter, wherein the third input power of the AC/DC converter is less than or equal to a maximum input power of the AC/DC converter;
wherein when the AC/DC converter works based on the third input power of the AC/DC converter, the difference value between the bus voltage and the bus balance voltage is less than or equal to the preset value.

10. The charging and discharging apparatus according to claim 9, wherein the control unit is further configured to:
when the bus voltage is greater than a bus balance voltage and a difference value between the bus voltage and the bus balance voltage exceeds the preset value in a process of discharging the power of the battery to the AC power source, adjusting an input power of the AC/DC converter to a maximum input power of the AC/DC converter and set an input power of the first DC/DC converter as the maximum input power of the AC/DC converter.

11. The charging and discharging apparatus according to any one of claims 1 to 10, wherein the second DC/DC converter is a bidirectional DC/DC converter, the first charging request further comprises a first charging voltage, and the control unit is specifically configured to:
set an output power of the first DC/DC converter according to the first charging voltage and the first charging current;
acquire the SOC of the energy storage unit;
when the SOC of the energy storage unit is greater than a third threshold, turn on the second DC/DC converter to charge the battery by the energy storage unit through the first DC/DC converter and the second DC/DC converter;
acquire a bus voltage of the charging and discharging apparatus in real time;
when the bus voltage is less than a bus balance voltage and a difference value between the bus voltage and the bus balance voltage exceeds a preset value in a process of charging the battery by the energy storage unit, adjust an output power of the second DC/DC converter to a first output power of the second DC/DC converter, wherein the first output power of the second DC/DC converter is less than or equal to a maximum output power of the second DC/DC converter;
wherein when the second DC/DC converter works based on the first output power of the second DC/DC converter, the difference value between the bus voltage and the bus balance voltage is less than or equal to the preset voltage value.

12. The charging and discharging apparatus according to claim 11, wherein the control unit is further configured to:
when the bus voltage is less than a bus balance voltage and a difference value between the bus voltage and the bus balance voltage exceeds the preset value in a process of charging the battery by the energy storage unit, adjust an output power of the second DC/DC converter to a maximum output power of the second DC/DC converter, turn on the AC/DC converter and adjust an output power of the AC/DC converter to a first output power of the AC/DC converter to simultaneously charge the battery by the AC power source through the AC/DC converter and the first DC/DC converter;
wherein when the second DC/DC converter works based on the maximum output power of the second DC/DC converter and the AC/DC converter works at the first output power of the AC/DC converter, the difference value between the bus voltage and the bus balance voltage is less than or equal to the preset value.

13. The charging and discharging apparatus according to claim 11 or 12, wherein the control unit is specifically configured to:
when the SOC of the energy storage unit is greater than a fourth threshold and less than the third threshold, turn on the AC/DC converter to charge the battery by the AC power source through the first DC/DC converter and the AC/DC converter;
when the bus voltage is less than a bus balance voltage and a difference value between the bus voltage and the bus balance voltage exceeds the preset value in a process of charging the battery by the AC power source, adjust an output power of the AC/DC converter to a second output power of the AC/DC converter, wherein the second output power of the AC/DC converter is less than or equal to a maximum output power of the AC/DC converter;
wherein when the AC/DC converter works based on the second output power of the AC/DC converter, the difference value between the bus voltage and the bus balance voltage is less than or equal to the preset value.

14. The charging and discharging apparatus according to claim 13, wherein the control unit is further configured to:
when the bus voltage is less than a bus balance voltage and a difference value between the bus voltage and the bus balance voltage exceeds the preset value in a process of charging the battery by the AC power source, adjust an output power of the AC/DC converter to a maximum output power of the AC/DC converter, turn on the second DC/DC converter and adjust an output power of the second DC/DC converter to a second output power of the second DC/DC converter to simultaneously charge the battery by the energy storage unit through the first DC/DC converter and the second DC/DC converter;
wherein when the AC/DC converter works based on the maximum output power of the AC/DC converter and the second DC/DC converter works based on the second output power of the second DC/DC converter, the difference value between the bus voltage and the bus balance voltage is less than the preset value.

15. The charging and discharging apparatus according to any one of claims 11 to 14, wherein the control unit is further configured to:
when the SOC of the energy storage unit is less than a fourth threshold, start the AC/DC converter to charge the battery by the AC power source through the first DC/DC converter and the AC/DC converter;
when the bus voltage is less than a bus balance voltage and a difference value between the bus voltage and the bus balance voltage exceeds the preset value in a process of charging the battery by the AC power source, adjust an output power of the AC/DC converter to a third output power of the AC/DC converter, wherein the third output power of the AC/DC converter is less than a maximum output power of the AC/DC converter;
wherein when the AC/DC converter works based on the third output power of the AC/DC converter, the difference value between the bus voltage and the bus balance voltage is less than or equal to the preset value.

16. The charging and discharging apparatus according to claim 15, wherein the control unit is further configured to:
when the bus voltage is less than a bus balance voltage and a difference value between the bus voltage and the bus balance voltage exceeds the preset value in a process of charging the battery by the AC power source, adjust an input power of the AC/DC converter to a maximum input power of the AC/DC converter and set an output power of the first DC/DC converter as a maximum input power of the AC/DC converter.

17. The charging and discharging apparatus according to any one of claims 1 to 16, wherein a charging rate of the first charging current and/or the second charging current ranges between 2C and 10C.

18. The charging and discharging apparatus according to any one of claims 1 to 17, wherein a discharging rate of the first discharging current ranges between 0.1C and 1C.

19. The charging and discharging apparatus according to any one of claims 1 to 18, wherein a ratio of the first accumulative discharging amount threshold to the first accumulative charging amount threshold is less than or equal to 10%.

20. The charging and discharging apparatus according to any one of claims 1 to 19, wherein at least one of the first charging current, the first discharging current and the second charging current is determined and acquired by the BMS according to a state parameter of the battery;
wherein the state parameter of the battery comprises at least one of the following parameters: a battery temperature, a battery voltage, a battery current, a state of charge and a state of health of the battery.

21. The charging and discharging apparatus according to any one of claims 1 to 20, wherein the control unit is specifically configured to:
regularly receive the first charging current transmitted by the BMS; and/or
regularly receive the first discharging current transmitted by the BMS; and/or
regularly receive the second charging current transmitted by the BMS.

22. The charging and discharging apparatus according to any one of claims 1 to 21, wherein the control unit is further configured to:
receiving a first charging voltage transmitted by the BMS, wherein the first charging voltage and the first charging current are carried in a first battery charging demand message; and/or
receiving a first discharging voltage transmitted by the BMS, wherein the first discharging voltage and the first discharging current are carried in a second battery charging demand message; and/or
receiving a second charging voltage transmitted by the BMS, wherein the second charging voltage and the second charging current are carried in the second battery charging demand message.

23. A method for charging a battery, being applied to a charging and discharging apparatus, the charging and discharging apparatus comprising a bidirectional alternating current/direct current (AC/DC) converter, a first direct current/direct current (DC/DC) converter, a second DC/DC converter and a control unit, wherein one end of the second DC/DC converter is connected between the first DC/DC converter and the bidirectional AC/DC converter, the other end of the second DC/DC converter is connected to an energy storage unit, and the first DC/DC converter is a bidirectional DC/DC converter;
wherein the method comprises:
receiving a first charging request transmitted by a battery management system (BMS) of a battery and controlling the bidirectional AC/DC converter and the first DC/DC converter according to the first charging request to charge the battery through an AC power source, and/or controlling the second DC/DC converter and the first DC/DC converter to charge the battery through the energy storage unit, wherein the first charging request comprises a first charging current;
receiving a first discharging request transmitted by the BMS and discharging a power of the battery according to the first discharging request, wherein the first discharging request comprises a first discharging current, and the first discharging request is a discharging current transmitted by the BMS when a first accumulative charging amount of the battery is greater than or equal to a first accumulative charging amount threshold and a voltage of a battery cell of the battery does not exceed a full charging voltage of the battery cell; and
receiving a second charging request transmitted by the BMS and controlling the bidirectional AC/DC converter and the first DC/DC converter according to the second charging request to charge the battery through the AC power source, and/or controlling the second DC/DC converter and the first DC/DC converter to charge the battery through the energy storage unit, wherein the second charging request comprises a second charging current and the second charging request is a charging current transmitted by the BMS when a first accumulative discharging amount of the battery is greater than or equal to a first accumulative discharging amount threshold.

24. The method according to claim 23, wherein the method further comprises:
receiving a second discharging request transmitted by the BMS and discharging the power of the battery according to the second discharging request, wherein the second discharging request comprises a second discharging current, and the second discharging current is a discharging current transmitted by the BMS when a second accumulative charging amount of the battery is greater than or equal to a second accumulative charging amount threshold and a voltage of a battery cell of the battery does not exceed a full charging voltage of the battery cell.

25. The method according to claim 23 or 24, wherein the method further comprises:
receiving a charging stop command transmitted by the BMS and stopping charging the battery according to the charging stop command, wherein the charging stop command is a command transmitted by the BMS when a voltage of a battery cell of the battery exceeds a full charging voltage of the battery cell.

26. The method according to any one of claims 23 to 25, wherein the discharging the power of the battery according to the first discharging current comprises:
controlling the first DC/DC converter and the bidirectional AC/DC converter according to the first discharging request to discharge the power of the battery to the AC power source; and/or
controlling the second DC/DC converter according to the first discharging request to discharge the power of the battery to the energy storage unit.

27. The method according to claim 26, wherein the first discharging request further comprises a first discharging voltage, the discharging the power of the battery according to the first discharging current comprises:
setting an input power of the first DC/DC converter according to the first discharging voltage and the first discharging current;
acquiring a state of charge (SOC) of the energy storage unit;
acquiring a bus voltage of the charging and discharging apparatus in real time;
when the SOC of the energy storage unit is less than a first threshold, turning on the second DC/DC converter to discharge the power of the battery to the energy storage unit through the first DC/DC converter and the second DC/DC converter;
when the bus voltage is greater than a bus balance voltage and a difference value between the bus voltage and the bus balance voltage exceeds a preset value in a process of discharging of the battery to the energy storage unit, adjusting an input power of the second DC/DC converter to a first input power of the second DC/DC converter, wherein the first input power of the second DC/DC converter is less than or equal to a maximum input power of the second DC/DC converter;
wherein when the second DC/DC converter works based on the first input power of the second DC/DC converter, the difference value between the bus voltage and the bus balance voltage is less than or equal to the preset value.

28. The method according to claim 27, wherein the method further comprises:
when the bus voltage is greater than a bus balance voltage and a difference value between the bus voltage and the bus balance voltage exceeds the preset value in a process of discharging of the battery to the energy storage unit, adjusting an input power of the second DC/DC converter to a maximum input power of the second DC/DC converter, turning on the AC/DC converter and adjusting an input power of the AC/DC converter to a first input power of the AC/DC converter to simultaneously discharge the power of the battery to the AC power source through the AC/DC converter and the first DC/DC converter;
wherein when the second DC/DC converter works based on the maximum input power of the second DC/DC converter and the AC/DC converter works at the first input power of the AC/DC converter, the difference value between the bus voltage and the bus balance voltage is less than or equal to the preset value.

29. The method according to claim 27 or 28, wherein the method further comprises:
when the SOC of the energy storage unit is greater than a second first threshold and less than a second threshold, turning on the AC/DC converter to discharge the power of the battery to the AC power source through the first DC/DC converter and the AC/DC converter;
when the bus voltage is greater than a bus balance voltage and a difference value between the bus voltage and the bus balance voltage exceeds the preset value in a process of discharging of the battery to the AC power source, adjusting an input power of the AC/DC converter to a second input power of the AC/DC converter, wherein the second input power of the AC/DC converter is less than or equal to a maximum input power of the AC/DC converter;
wherein when the AC/DC converter works based on the second input power of the AC/DC converter, the difference value between the bus voltage and the bus balance voltage is less than or equal to the preset value.

30. The method according to claim 29, wherein the method further comprises:
when the bus voltage is greater than a bus balance voltage and a difference value between the bus voltage and the bus balance voltage exceeds the preset value in a process of discharging of the battery to the AC power source, adjusting an input power of the AC/DC converter to a maximum input power of the AC/DC converter, turning on the second DC/DC converter and adjusting an input power of the second DC/DC converter to a second input power of the second DC/DC converter to simultaneously discharge the power of the battery to the energy storage unit through the first DC/DC converter and the second DC/DC converter;
wherein when the AC/DC converter works based on the maximum input power of the AC/DC converter and the second DC/DC converter works based on the second input power of the second DC/DC converter, the difference value between the bus voltage and the bus balance voltage is less than the preset value.

31. The method according to any one of claims 27 to 30, wherein the method further comprises:
when the SOC of the energy storage unit is greater than the second threshold, turning on the AC/DC converter to discharge the power of the battery to the AC power source through the first DC/DC converter and the AC/DC converter and controlling to turn off the second DC/DC converter to disable discharging of the power of the battery to the energy storage unit through the first DC/DC converter and the second DC/DC converter; and
when the bus voltage is greater than a bus balance voltage and a difference value between the bus voltage and the bus balance voltage exceeds the preset value in a process of discharging the power of the battery to the AC power source, adjusting an input power of the AC/DC converter to a third input power of the AC/DC converter, wherein the third input power of the AC/DC converter is less than or equal to a maximum input power of the AC/DC converter;
wherein when the AC/DC converter works based on the third input power of the AC/DC converter, the difference value between the bus voltage and the bus balance voltage is less than or equal to the preset value.

32. The method according to claim 31, wherein the method further comprises:
when the bus voltage is greater than a bus balance voltage and a difference value between the bus voltage and the bus balance voltage exceeds the preset value in a process of discharging the power of the battery to the AC power source, adjusting an input power of the AC/DC converter to a maximum input power of the AC/DC converter and setting an input power of the first DC/DC converter as a maximum input power of the AC/DC converter.

33. The method according to any one of claims 23 to 32, wherein the second DC/DC converter is a bidirectional DC/DC converter, the method further comprises:
setting an output power of the first DC/DC converter according to the first charging voltage and the first charging current;
acquiring the SOC of the energy storage unit;
when the SOC of the energy storage unit is greater than a third threshold, turning on the second DC/DC converter to charge the battery by the energy storage unit through the first DC/DC converter and the second DC/DC converter;
acquiring a bus voltage of the charging and discharging apparatus in real time;
when the bus voltage is less than a bus balance voltage and a difference value between the bus voltage and the bus balance voltage exceeds a preset value in a process of charging the battery by the energy storage unit, adjusting an output power of the second DC/DC converter to a first output power of the second DC/DC converter, wherein the first output power of the second DC/DC converter is less than or equal to a maximum output power of the second DC/DC converter;
wherein when the second DC/DC converter works based on the first output power of the second DC/DC converter, the difference value between the bus voltage and the bus balance voltage is less than or equal to the preset voltage value.

34. The method according to claim 33, wherein the method further comprises:
when the bus voltage is less than a bus balance voltage and a difference value between the bus voltage and the bus balance voltage exceeds the preset value in a process of charging the battery by the energy storage unit, adjusting an output power of the second DC/DC converter to a maximum output power of the second DC/DC converter, turning on the AC/DC converter and adjusting an output power of the AC/DC converter to a first output power of the AC/DC converter to simultaneously charge the battery by the AC power source through the AC/DC converter and the first DC/DC converter;
wherein when the second DC/DC converter works based on the maximum output power of the second DC/DC converter and the AC/DC converter works at the first output power of the AC/DC converter, the difference value between the bus voltage and the bus balance voltage is less than or equal to the preset value.

35. The method according to claim 33 or 34, wherein the method further comprises:
when the SOC of the energy storage unit is greater than a fourth threshold and less than the third threshold, turning on the AC/DC converter to charge the battery by the AC power source through the first DC/DC converter and the AC/DC converter;
when the bus voltage is less than a bus balance voltage and a difference value between the bus voltage and the bus balance voltage exceeds the preset value in a process of charging the battery by the AC power source, adjusting an output power of the AC/DC converter to a second output power of the AC/DC converter, wherein the second output power of the AC/DC converter is less than or equal to a maximum output power of the AC/DC converter;
wherein when the AC/DC converter works based on the second output power of the AC/DC converter, the difference value between the bus voltage and the bus balance voltage is less than or equal to the preset value.

36. The method according to claim 35, wherein the method further comprises:
when the bus voltage is less than a bus balance voltage and a difference value between the bus voltage and the bus balance voltage exceeds the preset value in a process of charging the battery by the AC power source, adjusting an output power of the AC/DC converter to a maximum output power of the AC/DC converter, turning on the second DC/DC converter and adjusting an output power of the second DC/DC converter to a second output power of the second DC/DC converter to simultaneously charge the battery by the energy storage unit through the first DC/DC converter and the second DC/DC converter;
wherein when the AC/DC converter works based on the maximum output power of the AC/DC converter and the second DC/DC converter works based on the second output power of the second DC/DC converter, the difference value between the bus voltage and the bus balance voltage is less than the preset value.

37. The method according to any one of claims 33 to 36, wherein the method further comprises:
when the SOC of the energy storage unit is less than a fourth threshold, turning on the AC/DC converter to charge the battery by the AC power source through the first DC/DC converter and the AC/DC converter;
when the bus voltage is less than a bus balance voltage and a difference value between the bus voltage and the bus balance voltage exceeds the preset value in a process of charging the battery by the AC power source, adjusting an output power of the AC/DC converter to a third output power of the AC/DC converter, wherein the third output power of the AC/DC converter is less than a maximum output power of the AC/DC converter;
wherein when the AC/DC converter works based on the third output power of the AC/DC converter, the difference value between the bus voltage and the bus balance voltage is less than or equal to the preset value.

38. The method according to claim 37, wherein the method further comprises:
when the bus voltage is less than a bus balance voltage and a difference value between the bus voltage and the bus balance voltage exceeds the preset value in a process of charging the battery by the AC power source, adjusting an input power of the AC/DC converter to a maximum input power of the AC/DC converter and setting an output power of the first DC/DC converter as a maximum input power of the AC/DC converter.

39. The method according to any one of claims 23 to 38, wherein a charging rate of the first charging current and/or the second charging current ranges between 2C and 10C.

40. The method according to any one of claims 23 to 39, wherein a discharging rate of the first discharging current ranges between 0.1C and 1C.

41. The method according to any one of claims 23 to 40, wherein a ratio of the first accumulative discharging amount threshold to the first accumulative charging amount threshold is less than or equal to 10%.

42. The method according to any one of claims 23 to 41, wherein at least one of the first charging current, the first discharging current and the second charging current is determined and acquired by the BMS according to a state parameter of the battery;
wherein the state parameter of the battery comprises at least one of the following parameters: a battery temperature, a battery voltage, a battery current, a state of charge and a state of health of the battery.

43. The method according to any one of claims 23 to 42, wherein
the receiving the first charging current transmitted by a BMS of a battery comprises:
regularly receiving the first charging current transmitted by the BMS; and/or
the receiving the first discharging current transmitted by the BMS comprises:
regularly receiving the first discharging current transmitted by the BMS; and/or the receiving the second charging current transmitted by the BMS comprises:
regularly receiving the second charging current transmitted by the BMS.

44. The method according to any one of claims 23 to 43, wherein
the first charging voltage and the first charging current are carried in a first battery charging demand message; and/or
the first discharging voltage and the first discharging current are carried in a second battery charging demand message; and/or
the second charging voltage and the second charging current are carried in the second battery charging demand message.

45. A charging and discharging apparatus, comprising a processor and a memory, wherein the memory is configured to store a computer program, and the processor is configured to call the computer program to perform the method for charging a battery according to any one of claims 23 to 44.

46. A charging and discharging system, comprising:
a battery management system (BMS) of a battery; and
the charging and discharging apparatus according to any one of claims 1 to 22.
